Europäisches Patentamt

European Patent Office

Office européen des brevets

(19)

(11) EP 0 508 627 B1

(12) # EUROPEAN PATENT SPECIFICATION

(45) Date of publication and mention
of the grant of the patent:
**13.01.1999 Bulletin 1999/02**

(51) Int Cl.6: **G06F 7/50**

(21) Application number: **92302413.7**

(22) Date of filing: **20.03.1992**

(54) **Method and apparatus for generating carry out signals**

Verfahren und Anordnung zur Erzeugung von Übertragsignalen

Méthode et dispositif de génération des signaux de retenue

(84) Designated Contracting States:
**DE FR GB IT SE**

(30) Priority: **08.04.1991 US 682575**

(43) Date of publication of application:
**14.10.1992 Bulletin 1992/42**

(73) Proprietor: **SUN MICROSYSTEMS, INC.**
**Mountain View, CA 94043 (US)**

(72) Inventor: **Patel, Samir**
**Union City, California 94587 (US)**

(74) Representative: **Wombwell, Francis**
**Potts, Kerr & Co.**
**15, Hamilton Square**
**Birkenhead Merseyside L41 6BR (GB)**

(56) References cited:
**EP-A- 0 123 921** **EP-A- 0 334 768**

- **IBM TECHNICAL DISCLOSURE BULLETIN.,
  vol.33, no.6B, November 1990, NEW YORK US
  pages 157 - 159 'Fast carry save adder'**
- **IEEE JOURNAL OF SOLID-STATE CIRCUITS,
  vol.24, no.5, October 1989, NEW YORK US pages
  1317 - 1323 BENSCHNEIDER ET AL. 'A pipelined
  50-MHz CMOS 64-bit floating-point arithmetic
  processor'**
- **IEEE JOURNAL OF SOLID-STATE CIRCUITS,
  vol.24, no.3, June 1989, NEW YORK US pages
  558 - 561 ROTHERMEL ET AL. 'Realization of
  transmission-gate conditional-sum (TGCS)
  adders with low latency time'**
- **PATENT ABSTRACTS OF JAPAN vol. 9, no. 312
  (P-411) (2035) 7 December 1985 & JP-A-60 142
  423 (FUJITSU K.K.) 27 July 1985**

## Description

## BACKGROUND OF THE INVENTION

### 1. Field Of The Invention:

This invention relates to computer circuits and, more particularly, to methods and apparatus for rapidly generating the carry out signals for adder circuits.

### 2. History Of The Prior Art:

Adder circuits are used in digital computers for many purposes. In most of those uses, the speed of those circuits is paramount. For example, the primary manner in which the sequential flow of information is changed in a digital computer is through the use of conditional branch operations. In general, a conditional branch operation depends on some arithmetic operation and, based on the result, makes a decision whether or not to branch to a particular address. The result of the arithmetic operation usually involves a summation, carry outs, and a sign; and the decision may depends on any of these elements, combinations of these elements, or flags generated from these elements. The length of time required to generate flags which depend on the final carry out value is usually the critical element and is, consequently, a major factor in achieving higher processor speed.

There has been a plethora of work directed to improving the speed of adders. Much of this work has been directed to improving the speed of computation of the carry out since this computation usually takes the longest time. This is true because the carry out from the most significant stage depends on what has happened at each of the lower stages of the addition. Typically, the carry out at each stage is computed along with the computation of the sum. Ultimately, the carry out and the sum are used to compute other factors necessary for deciding the conditional branch functions.

Carry look ahead, carry select, and Manchester carry chain schemes are some of the fast hardware implementations of adders. Carry look ahead adders and Manchester carry chain adders are limited in speed because their operation is inherently serial in nature. Carry select adders, on the other hand, compute two results of groups of digits in parallel and select the correct one of the two after the carry-in value to the group is known. When a number of columns are computed in parallel as subsets, at least in theory very fast operation could result. However, in reality such adders take up a great deal of circuitry and are therefore expensive to implement and slower than theoretically predicted. An arrangement is needed which operates rapidly yet does not utilize the very large amount of circuitry required by the prior art.

One form of adder which in theory produces very fast results is the conditional sum adder described by J. Sklansky in an article entitled "Conditional-Sum Addition Logic", published in June 1960, IRE Transactions On Electronic Computers. Although it was suggested that this form of adder would produce very fast results, the very large number of gates required to produce those results and the delay through those gates have made such an adder in practice no faster than other fast adders. Consequently, it is still true that an arrangement is needed which operates rapidly yet does not utilize the very large amount of circuitry required by the prior art.

In IBM Technical Disclosure Bulletin, Volume 33, No. 6B, November 1990, New York, US pages 157-159 there is disclosed a "fast carry adder" which is a modification of the conventional carry save adder technique to speed up the addition process, but again as other prior art arrangements, such take up a great deal of circuitry which can be expensive to implement.

## SUMMARY OF THE INVENTION

It is, therefore, an object of the present invention to provide new circuitry for computing the carry out from the summation of two binary numbers. It is another more specific object of the present invention to provide circuitry which computes the carry out of the sum of two binary numbers rapidly and separately from the sum of the two numbers.

It is yet another more specific object of the present invention to provide circuitry to generate rapidly all of the flags necessary to conditional branch operations.

These and other objects are achieved by a circuit as defined in one of the independent claims 1 and 4.

These and other objects of the present invention are realized in a circuit that separates the carry generation function from the summation function of the adder to produce a much faster carry generation. By utilizing two possible carry outs values from each bit of two numbers being added, then in successive stages combining the two possible carry outs of each bit with two possible carry outs from one or more lower order bits to generate two possible higher order carry outs and continuing this process until an actual carry out for preceding stages is determined, a final carry out can be generated before the result of the summation is obtained. This carry out is used to rapidly determine all of the flags required to arrive at the results for conditional branch operations.

These and other objects and features of the invention will be better understood by reference to the detailed description which follows taken together with the drawings in which like elements are referred to by like designations throughout the several views.

## BRIEF DESCRIPTION OF THE DRAWINGS

Figure 1 is a block diagram of a typical adder circuit of the prior art. Figure 2 is a block diagram of a conditional sum adder proposed by the prior art.

Figure 3 is a block diagram of a carry compute circuit.

Figure 4 is a block diagram of a carry compute circuit constructed in accordance with the invention.

Figure 5 is a circuit diagram of a portion of the circuit illustrated in Figure 4.

Figure 6 is a circuit diagram of another portion of the circuit illustrated in Figure 4.

Figure 7 is a block diagram of a third carry compute circuit constructed in accordance with the invention.

Figures 8-11 are circuit diagrams of portions of the circuit illustrated in Figure 7.

## NOTATION AND NOMENCLATURE

Some portions of the detailed descriptions which follow are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like. It should be borne in mind, however, that all of these and similar terms are to be associated with the appropriate physical quantities and are merely convenient labels applied to these quantities.

Further, the manipulations performed are often referred to in terms, such as adding or comparing, which are commonly associated with mental operations performed by a human operator. No such capability of a human operator is necessary or desirable in most cases in any of the operations described herein which form part of the present invention; the operations are machine operations. In all cases the distinction between the method operations in operating a machine and the method of computation itself should be borne in mind. The present invention relates to apparatus and to method steps for operating a computer in processing electrical or other (e.g. mechanical, chemical) physical signals to generate other desired physical signals.

## DETAILED DESCRIPTION OF THE INVENTION

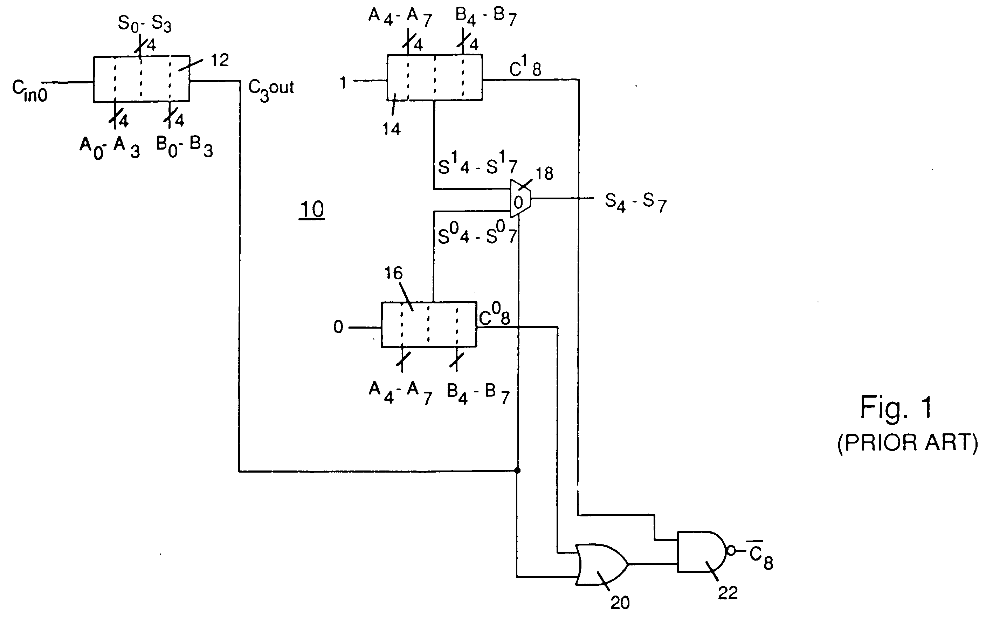

Figure 1 illustrates a typical arrangement for obtaining the rapid addition of two binary numbers. A first carry-look-ahead adder 12 is utilized to add together the lower four bits of two binary numbers A and B. The adder 12 receives the carry-in signal Cin0 and propagates that signal through the stages combining it with the bits being added at the various stages to produce a result S0-S3 and a carry-out signal C3 from the last stage. Simultaneously, an adder circuit 14 receives the higher order bits 4-7 of the two binary numbers A and B and computes a sum S1_4-S1_7 and a carry out C1_7 presuming a carry in from stage three of one; and an adder circuit 16 is furnished the higher order bits of the two numbers A and B and computes a sum S0_4-S0_7 and a carry out C0_7 presuming a carry in from stage three of zero. The correct higher order sum bits are selected by the final carry out C3 from the adder 12 using a multiplexor 18. In a similar manner, the correct final carry out "not C8" is produced by an OR gate 20 and an NAND gate 22 which select from the two possibilities depending on the condition of the carry out C3.

As may be seen, producing the carry out "not C8" requires that the circuitry of Figure 1 wait for the results of the various additions of the bits of the numbers A and B in the adders 12, 14, and 16 to determine the sums S0-S7 within the stages as well as the carry computations. This slows the operation of the adder and the generation of carry out signals. For example, the carry out C3out of the adder 12 is used within the blocks 18 and 20 to control the multiplexing of the sum value as well as the computation of "not C8". This use in computing sum values increases the amount of logic involved and, consequently, the time required for producing a final carry output.

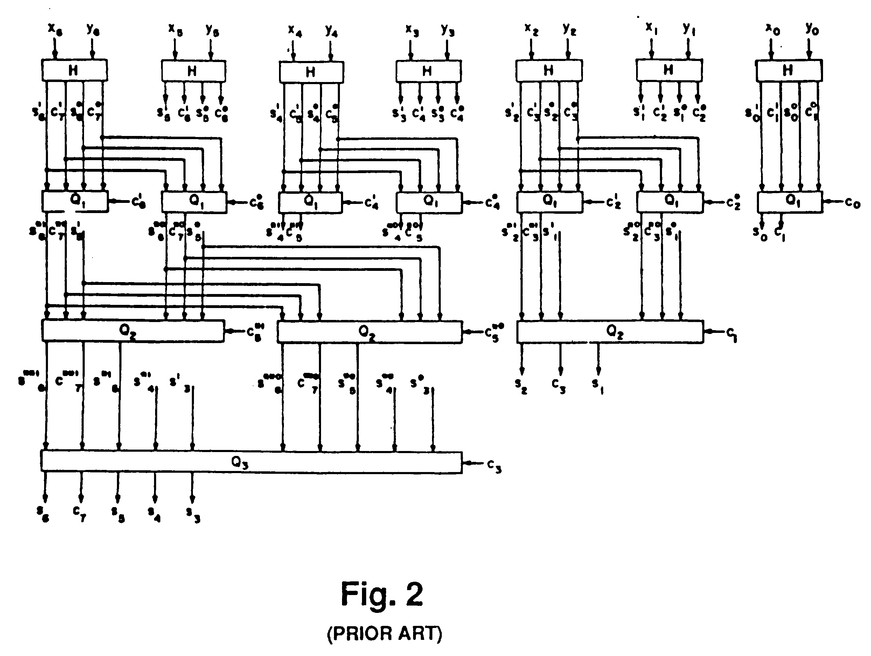

Figure 2 illustrates a conditional carry adder proposed by Sklansky in the above-mentioned paper. In this adder, two seven bit numbers are added bit by bit (represented by x0y0 through x6y6) at a first level by bit adders H to produce four possible outputs from each of the adder circuits: a sum produced if the carry in is zero, a sum produced if the carry in is one, a carry out produced if the carry in is zero, and a carry out produced if the carry in is one. The output signals produced by alternate ones of these first level adder circuits H are furnished to pairs of second level circuits Q1. The circuits Q1 are enabled by either a carry in zero or a carry in one from the output of the preceeding bit. Thus these circuits transfer to their outputs signals which depend on the state of the carry in from the preceeding stage. This continues to a next level where the possible sums and carry outs of the two Q1 stages are both furnished to a second pair of circuits Q2 along with the possible sums from the preceding stage. One of the circuits Q2 is enable by a zero carry in from the preceding stage and the other by a one carry in. This continues for as many stages as are necessary for the number of bits in the two numbers to be added. Thus, the results of each level are reached without waiting for the results of the previous level so that at the Q3 level all of the carry possibilities still exist. This theoretically allows very fast operation. In fact, the speed of operation is dependant upon the time required to produce the actual carry out values (C1, C3, C5, etc ) from each level, and these values and the possible sum bits at each level are determined using intermediate possible carry out values.

Moreover, as may be seen from viewing the circuit of Figure 2, the circuitry required to implement the arrangements shortly becomes overwhelming. In fact, Sklansky specifically warns circuit designers that "the maximum fanout is an increasing function of the summand length." This increase in the number of gates due to the inclusion of the circuitry for summing the bits greatly increases the cost of the arrangement and the time taken by the adder to produce a carry out value. This is probably the reason that no practical arrangements of this type have been implemented.

It has now been discovered that by separating the carry generation function from the summation function of the adder a much faster carry generation may be accomplished. Moreover, by utilizing the basic arrangement of a conditional sum adder with only the two possible carry outs from each bit of the two numbers being added to generate two possible carries, then in successive stages combining the two possible carry outs from each bit with two possible carry outs from one or more lower order bits to generate two possible higher order carries and continuing this process until an actual carry from preceding stages is determined, a final carry out can actually be generated more rapidly than the result of the summation can be obtained. The separation of the generation of the carry out values eliminates the delays caused by the summation circuitry in the prior art arrangements.

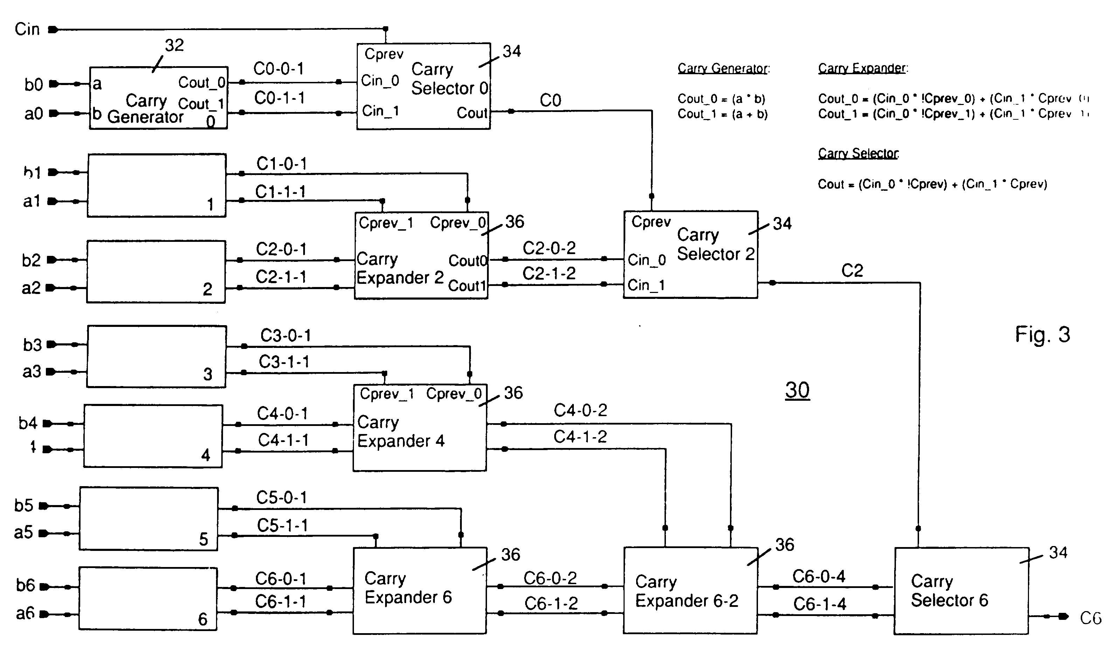

Figure 3 illustrates a block diagram of a carry circuit. The circuit 30 illustrated in Figure 3 is utilized to generate the carry-out bit from the addition of two eight bit binary numbers. Only the lower seven bits of an eight bit number need be used to obtain the carry out value and the other values necessary to the determination of conditional branch equations as will be seen from the discussion which follows. The circuit 30 includes seven individual carry generator circuits 32 which are individually designated carry generator 0 through carry generator 6. Each carry generator circuit 32 receives as input two bits, one each from the addend and the augend, at the particular bit position. Thus, the two lowest order bits to be summed are placed in the carry generator 0. Simultaneously, all of the other carry generators 1-6 receives the two bits of the augend and addend at their particular bit positions.

Each carry generator 32 produces two possible carry out values; these values are the carry out from the stage if the carry in to that bit is a zero and the carry out from the stage if the carry in is a one. For carry generator 0, these signals are designated C0-0-1 and CO-1-1, the designation indicating first a carry out for bit 0, next a carry out for a zero or one carry in value, and finally that the carry outs result from a single level of determination. The carry out signals from the other carry generators 32 and the other circuitry described are similarly designated.

As those skilled in the art will realize, the results produced by the carry generators 32 may be summarized by the two equations placed under the title "Carry Generator" to the right of the circuitry in Figure 3. That is, the carry out signal where the carry in signal is a zero (Cout_0) can be a one only if both of the bits summed at that level are ones. Additionally, the carry out signal where the carry in signal is a one (Cout_1) can be a one only if one of the bits summed at that level is a one. These two carry out signals are propagated from each of the carry generators 32 to the next stage. But if the Cout_0 signal is a one, it is impossible for the carry out signal Cout_1 to produce a zero carry out signal since both bits to be summed are ones. This fact is used to reduce the complication of the circuitry in the following stages of this circuit (and in other circuits discussed hereinafter) by eliminating the need to provide totally complementary logic.

The carry out values from each of the carry generators 0-6 are transferred to a second stage. For the lowest order bit 0, this stage is a carry selector 34. The carry selector 34 receives the two possible carry out values from the preceding stage (carry generator 0 in this case) and selects the correct one of the two based on the actual carry in value Cprev from the preceding stage. This carry select operation may be expressed by the equations for "Carry Select" shown to the right in the drawing in Figure 3. It may be seen that the carry out for a zero carry in is selected if the carry in Cprev from the previous stage is zero, and the carry out for a one carry in is selected if the carry in Cprev from the previous stage is one.

The carry selector 0 thus produces the actual carry out C0 from the bit 0 stage at the first level. This result is transferred to an identical carry selector circuit 34 identified as carry selector 2. The carry out C2 from carry selector 2 is in turn transferred to an identical carry selector 6.

For each bit stage other than bit 0, the two possible carry outs from the carry generator circuit 32 are furnished to a carry expander circuit 36. Four of these carry expander circuits 36 are illustrated in Figure 3, and each operates in the same manner. Each expander circuit 36 on the first level (expanders 2, 4, and 6) receives from the carry generators 32 of two adjacent bit positions the two possible carry outs from those bit positions, and provides two possible carry out signals based on those four possible inputs. Thus, for example, the carry expander 2 receives the carry out signals C1-0-1 and C1-1-1 from the carry generator 1 for bit 1, and the carry out signals C2-0-1 and C2-1-1 from the carry generator 2 for bit 2. These four signals are used to generate the two possible outs C2-0-2 (possible carry out if carry in to bit 2 is zero, second level) and C2-1-2 (possible carry out if carry in to bit 2 is one, second level). The logical equations defining the operation of the expander circuits 36 are given in Figure 3 under "Carry Expander" to the right of the figure.

The two possible values produced by each carry expander circuit 36 are transferred to either a carry selector circuit 34 or another carry expander 36 depending on the level of the bits involved. At the bit two level, the two carry outs are transferred to a carry selector 2, for example, where the carry out C0 from carry selector 0 selects the appropriate one of the two carry out signals which result from the four possible carry outs at the carry generator level. The two carry outs from carry expander 4 and the two carry outs from carry expander 6, on the other hand, are both transferred as the inputs to a second level carry expander 6-2. These signals which represent a total of four possible carry outs from the carry generator level are combined in the same manner as for the other carry expander circuits 36 to produce two possible carry out signals C6-0-4 and C6-1-4. The final carry out signal C6 is selected from these last two possible carry out signals by carry selector 6 in response to the actual carry out value C2 from bit 2.

It should be noted that since a final carry out value is all that is needed in order to assist in determining the branching operation to be taken, none of the intermediate values is necessary to the carry out result. Furthermore, since the carry out function is separated from the summing function, the intermediate carry out bits are used only to generate higher order carry out bits and are not delayed by the necessity to be utilized in generating a plurality of summations as in the circuit illustrated in Figures 1 and 2. In fact, the separation of carry from adder makes "the maximum fanout a constant rather than an increasing function of the summand length." As pointed out above, the carry out bit C6 may be utilized in an eight bit adder since it is only necessary that the next to most significant bit be available to compute the carry out from the most significant bit. This may be demonstrated from the following equations which illustrate that the carry out flag, the N flag, the V flag, and the L flag may all be generated once the carry out C6 (and thus !C6) at the next to most significant bit is obtained. These are almost all the flags except the zero flag necessary to determine a conditional branch operation. The zero flag goes active when the sum of two operands equals zero. There is an already established fast implementation for generating the zero flag in the industry.

$$Cflag = (a7*b7)*!C6+(a7+b7)*C6$$

$$Nflag = (a7 \text{ XOR } b7)*!C6+(!(a7 \text{ XOR } b7))*C6$$

$$Vflag = (a7*b7)*!C6+((!a7)*(!b7))*C6$$

$$Lflag = (Nflag \text{ XOR } Vflag)=(a7+b7)*!C6+(a7)*b7)*C6$$

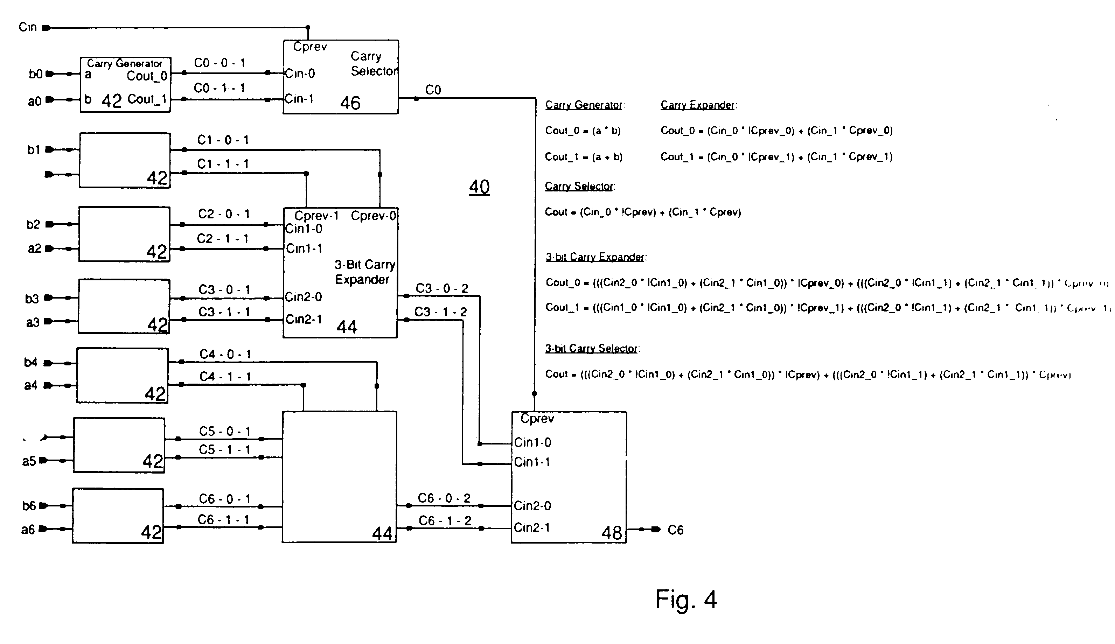

As may be seen, in Figure 3 four stages of operation are required for computing the carry out in adding two eight bit binary numbers using the circuit described therein. A further improvement in speed may be attained by recognizing that the carry expander and carry selector circuits do not have to handle only two bits at a time. In fact, they may handle any number of bits and may be combined. Figure 4, for example, illustrates a carry circuit 40 in accordance with the present invention which produces the carry out signal from the addition of two eight bit numbers using only three stages of operation. As may be seen, the circuit 40 includes the same number of carry generator circuits 42 as does the circuit 20 of Figure 3. However, the circuit 40 includes only two carry expanders 44, a carry selector 46, and a second carry selector 48 to accomplish the production of the final carry out in only three levels and help to speed the production of the final carry out signal. The carry expanders 44 each receive a pair of possible carry out signals from each of three (rather than two) individual carry generators 42 and produce a pair of possible carry out signals. These signals are generated in accordance with the equations illustrated in Figure 4. The carry selector 46 is identical to the carry selectors 34 used in the circuit 30 of Figure 3 and produces a single carry out signal C0 resulting from the addition of the bits at bit 0 and the carry in signal. Carry selector 48, on the other hand, receives the two possible carry out signals from each of the carry expanders 46 and selects the appropriate carry out signal C6 based on the carry out C0 from the carry selector 46. The operation of the carry selector 48 is actually both carry expansion and selection and is based on the equations for that function illustrated in Figure 4.

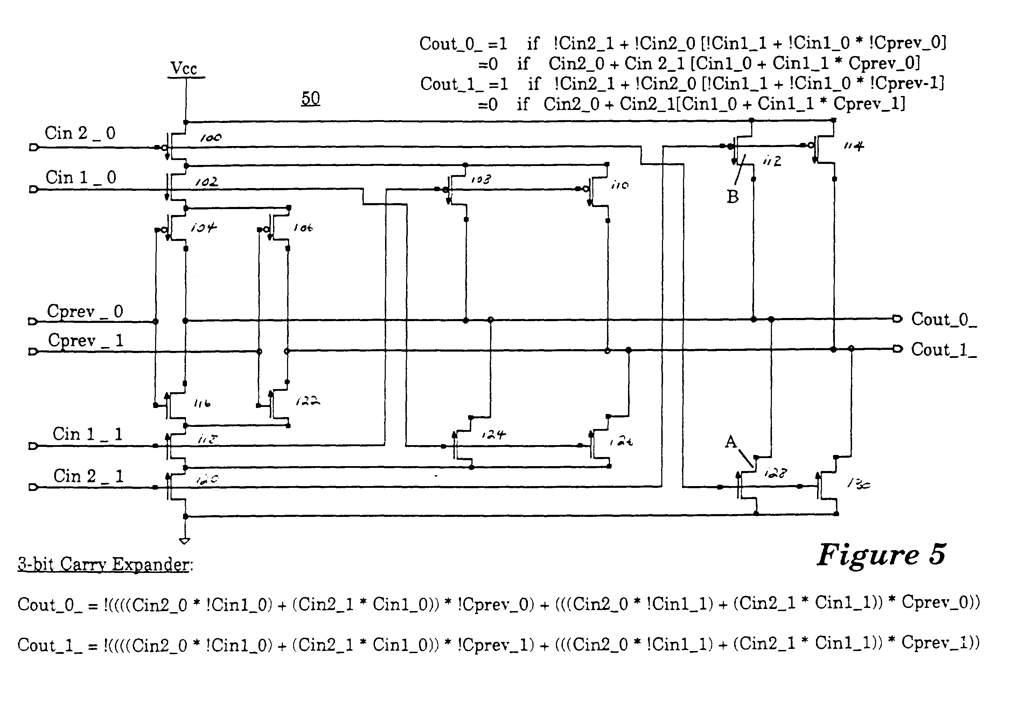

Figure 5 illustrates a circuit 50 which may be utilized to accomplish the functions described by the equations for the three bit carry expander circuit 44 illustrated in Figure 4. As may be seen in Figure 5, the circuit 50 receives the two possible carry out signals from each of three bit positions as inputs signals and produces a pair of possible output signals Cout_0 and Cout_1. The actual circuit is constructed of a plurality of p-channel FET devices (all of the devices above the Cprev_0 input line in the figure) and a plurality of n-channel FET devices (below the Cprev_0 input line in the figure). The p-channel devices are each turned on by zero signals applied to the gate terminal while the n-channel devices are each turned on by one signals applied to the gate terminal. This circuit construction applies for all of the circuit diagrams illustrated.

The operation of the circuit 50 illustrated in Figure 5 may be understood from the general equations positioned below the circuit 50. For example, the carry out signal Cout_0 is not a one (is a zero, used because the circuit is carried out in inverting logic) under a number of different circumstances. One of these circumstances is if the carry out signal for a zero carry in of the highest of the three bits Cin2_0 is a one and the carry out signal for a zero carry in of the next highest of the three bits Cin1_0 is a zero and the carry out signal for a zero carry in of the next lowest of the three bits Cprev_0 is a zero. The connections made in the circuit in response to these three inputs can be seen to place ground at the Cout_0_terminal through the transistor A. The response of the circuit of Figure 5 may be seen to follow the other elements of the equations in a similar manner.

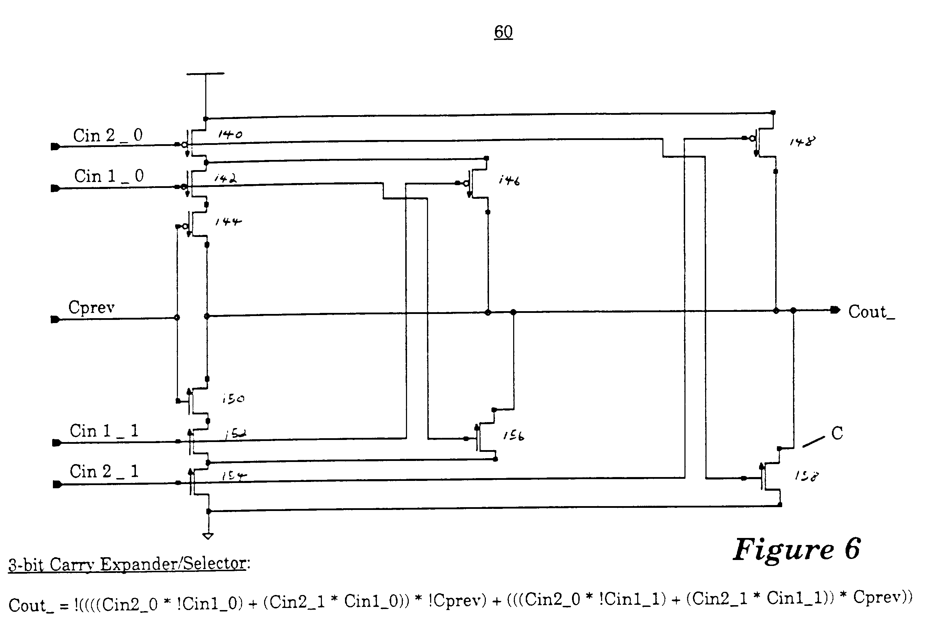

Although the general equations described under the circuit 50 may be utilized to implement operable circuits, the present invention as represented by the circuit 50 provides faster operation than does the complete implementation of these general equations. The circuit of Figure 5 makes use of the fact that certain input conditions cannot occur to reduce the complexity necessary to operate in accordance with the equations. These conditions are that Cin2_0 = 1 and Cin2_1 = 0 cannot both occur simultaneously. In a like manner, Cin1_0 = 1 and Cin1_1 = 0 cannot both occur; and CPrev_0 = 1 and Cprev_1 = 0 cannot both occur. For example, in the circuit of Figure 5, if Cin2_0= 1, the transistor labelled A connects ground to the line Cout_0; if Cin2_1 = 0, the transistor labelled B connects Vcc to the line Cout_0_. This would be disasterous in a circuit in which both conditions could occur simultaneously. To cause it not to affect the circuit, a typical prior art arrangement would provide additional transistors to keep the two conditions from occurring simultaneously. However, the present invention takes cognizance of the fact that the conditions cannot logically occur and reduces the circuitry required. This makes the circuit operate faster than might be expected using the typical circuits which might be constructed to implement the logic. The equations illustrated in Figure 5 above the circuit 50, in fact, illustrate more exactly the operation of the circuit 50 as it is constructed without the redundant stages. A simple count of the number of conditions which must exist to render an operation true will illustrate how many fewer stages are required in the preferred embodiment of the circuitry of the present invention than would be required were the entire equation to be implemented. Although not discussed in detail with regard to the other circuits of this invention, it should be noted that each of these other circuits makes use of the same fact to reduce the circuitry necessary to implement the invention. Figure 6 illustrates in a similar manner a circuit 60 which may be utilized to accomplish the functions described by the equations for the carry selector circuit 48 illustrated in Figure 4. As with the circuit 50 of Figure 5, the operation of the selector may be understood from considering the equations for that three bit selector in Figure 4. For example, the carry out signal Cout_ is not a one (is a zero) under a number of different circumstances. One of these circumstances is if the carry out signal for a zero carry in of the highest of the three bits Cin2_0 is a one and the carry out signal for a zero carry in of the next highest of the three bits Cin1_0 is a zero and the carry out signal for the carry in of the next lowest of the three bits Cprev is a zero. The connections made in the circuit in response to these three inputs can be seen to place ground at the Cout_terminal through the transistor B. The other elements of the equations may be seen to occur in a similar manner.

The method of implementing the circuits in inverting logic should be noted. In each case the arrangement is such that the transistors furnish the source voltage directly to the next stage of the circuitry. In this manner, it is unnecessary to provide buffer stages for making up for any losses in the stage. Thus the delays which might have been produced in circuitry using standard multiplexors and buffers is eliminated.

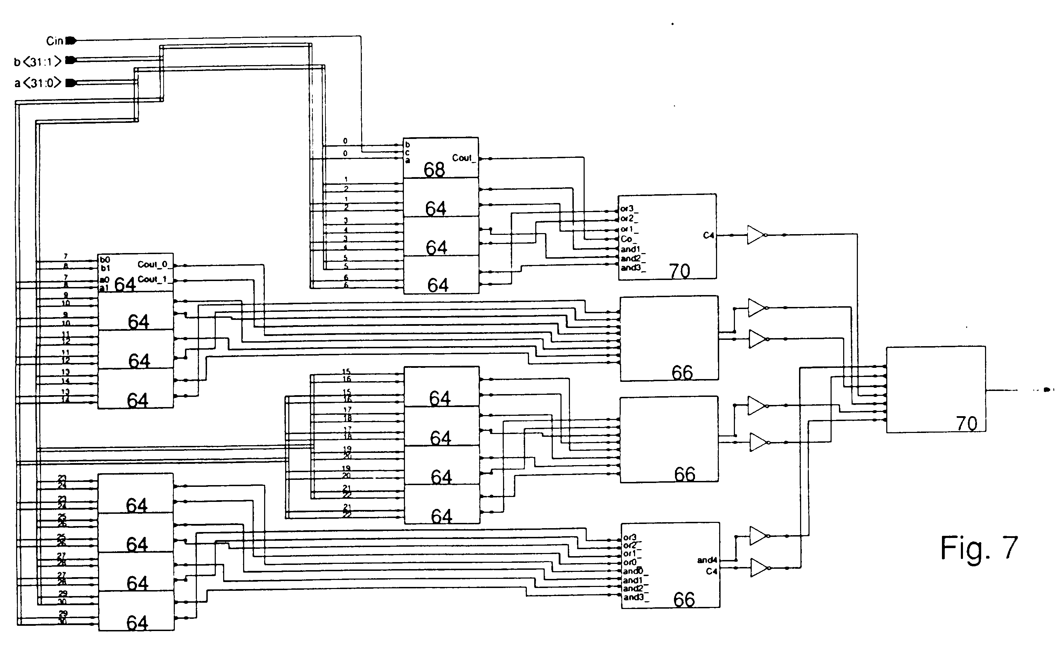

A circuit designed in accordance with the present invention for producing the carry out signal for a thirty-two bit addition is illustrated in Figure 7. The elements of the block diagram include two bit carry generation and expander circuits 64 which serve the functions of both generating and expanding from a pair of bit positions, three four bit carry expander circuits 66, one two bit carry generation and selector circuit 68 which serves the functions of both generating and selecting from a single bit position, and two four bit carry selectors 70. The circuits 64 function in the manner described above to generate the possible carry outs at each of a pair of bit positions 1-30 and combine each the carry outs from each two adjacent bits after the first bit to produce two more possible carry outs. The circuits 66 further combine the results of each four combination for bits 7-30 to reach two more possible carry outs. The possible carry outs from the circuits 66 are all provided as inputs to the rightmost selector circuit 70. The possible carry outs from the circuits 64 from bits 1-6 are furnished to the leftmost carry selector circuit 70 and the carry out C6 is selected using the carry out C0 determined for bit 0 by the carry generator and selector circuit 68. The carry out C6 from the carry selector circuit 70 which selects from the first seven bit levels is used to select the carry out C30 from the rightmost circuit 70 which is used to generate the flags necessary to control the conditional operations mentioned above.

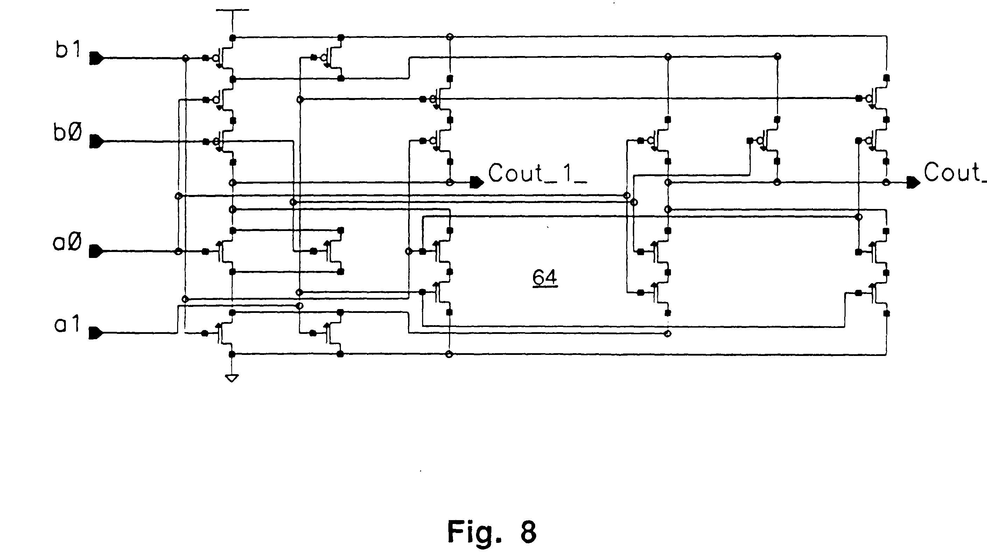

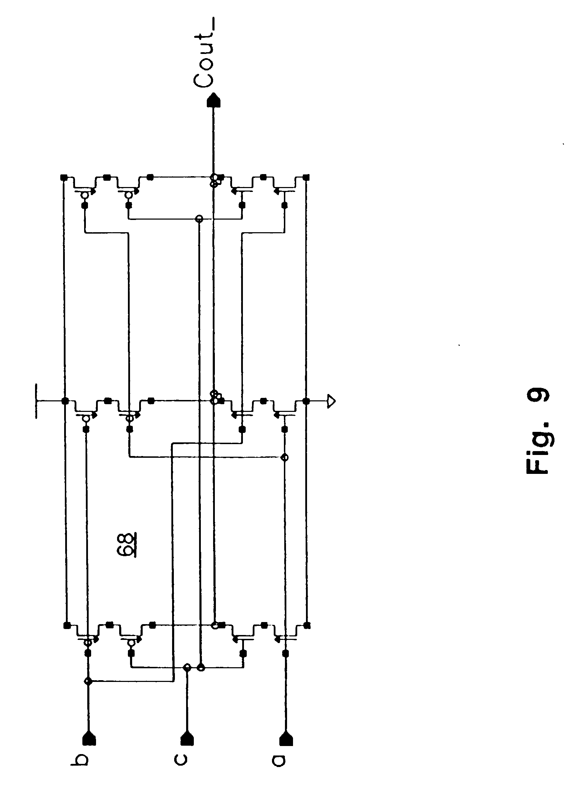

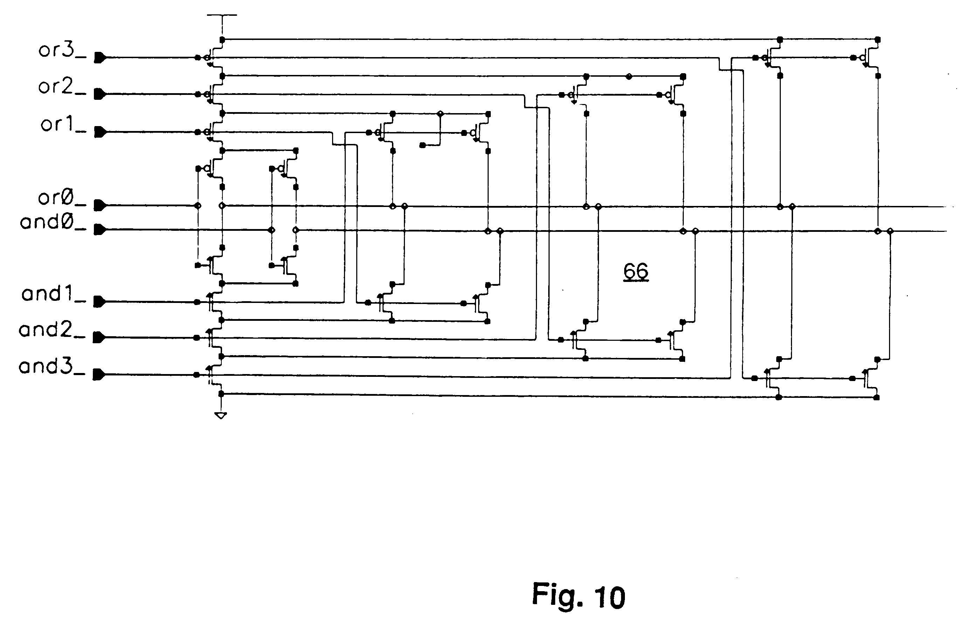

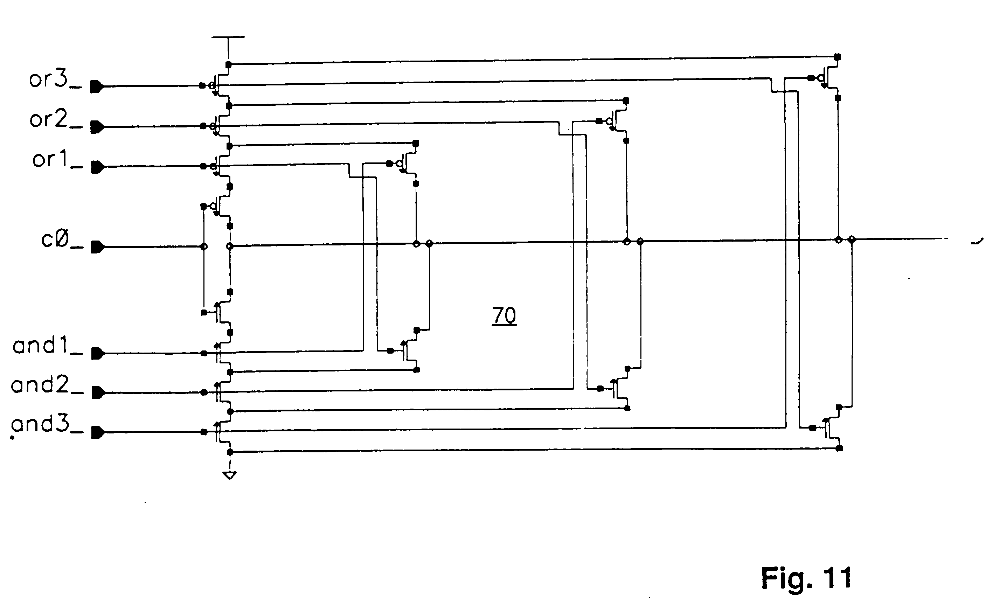

A two bit carry generator and expansion circuit 64 is illustrated in Figure 8. A two bit carry generator and selector circuit 68 is illustrated in Figure 9. A four bit carry expander circuit 66 is illustrated in Figure 10. A four bit selector circuit 70 is illustrated in Figure 11. Each of these circuits is designed in a similar manner to the circuits discussed in detail above to provide the fastest possible carry out response by eliminating redundant transistors. It should be noted that the merger of the carry out generation and expansion in the circuit 64 and the carry generation and selection in the circuit 68 help reduce the number of stages of the circuit of Figure 7 by one and thus reduce the time required to generate the ultimate carry out signal.

**Claims**

1.  A circuit for generating a carry out signal resulting from the summation of a first plurality of signals corresponding to a first binary number, a second plurality of signals corresponding to a second binary number, and a first carry in signal, said carry out signal being generated independently of a determination of a sum of said first and second binary numbers, said circuit characterised by:

a plurality of carry generator circuits (42), wherein each of said carry generator circuits (42) receives as inputs a separate and distinct first signal from said first plurality of signals and a separate and distinct second signal from said second plurality of signals, and further wherein, each one of said carry generator circuits (42) outputs a first generator output signal representative of a first carry out signal for a carry in signal of a first value and a second generator output signal representative of a second carry out signal for a carry in signal of a second value, said first generator output signal corresponding to the result of a first logic operation performed upon said first signal and said second signal, said second generator output signal corresponding to the result of a second logic operation performed upon said first signal and said second signal;

a plurality of carry expander circuits (44) wherein each one of said plurality of carry expander circuits (44) receives as inputs, from at least three adjacent bit positions, a first generator output signal and a second generator output signal from a first distinct one of said plurality of carry generator circuits (42), a first generator output signal and a second generator output signal from a second distinct one of said plurality of carry generator circuits (42), and a first generator output signal and a second generator output signal from a third distinct one of said plurality of carry generator circuits (42), further wherein, each one of said plurality of carry expander circuits (44) outputs a first carry expander output signal for a carry in signal of a first value and a second carry expander output signal for a carry in signal of a second value ;

a first carry selector circuit (46) receiving as inputs a first generator output signal and a second generator output signal from one of said plurality of carry generator circuits (42), and said first carry in signal, wherein said first carry selector circuit (46) outputs a first carry selector output signal determined by said first carry in signal;

a second carry selector circuit (48) receiving as inputs a first carry expander output signal and a second carry expander output signal from a first distinct one of said plurality of carry expander circuits (44), a first carry expander output signal and a second carry expander output signal from a second distinct one of said plurality of carry expander circuits (44), and said first carry selector circuit (46) output signal, wherein said second carry selector circuit (48) outputs a second carry selector output signal determined by said first carry selector output signal; wherein said second carry selector output signal is utilised to determine said carry out signals;

and further wherein said second carry selector circuity (48) comprises:

a first transistor (140) including a drain terminal, a gate terminal, and a source terminal, wherein said drain terminal of said first transistor (140) is coupled to a first voltage potential, and said gate terminal of said first transistor (140) receives as input said first carry expander output signal from said second distinct one of said plurality of carry expander circuits (44);

a second transistor (142) including a drain terminal, a gate terminal, and a source terminal, wherein said drain terminal of said second transistor (142) is coupled to said source terminal of said first transistor (140), and said gate terminal of said second transistor (142) receives as input said first carry expander output signal from said first distinct one of said plurality of carry expander circuits (44);

a third transistor (144) including a drain terminal, a gate terminal, and a source terminal, wherein said drain terminal of said third transistor (144) is coupled to said source terminal of said second transistor (142), and said gate terminal of said third transistor (144) receives as input said first carry selector circuit (46) output signal;

a fourth transistor (146) including a drain terminal, a gate terminal, and a source terminal, wherein said drain terminal of said fourth transistor is coupled to said source terminal of said first transistor (140), said gate terminal of said fourth transistor (146) receives as input said second carry expander output signal from said first distinct one of said plurality of carry expander circuits (44), and said source terminal is coupled to said source terminal of said third transistor (144);

a fifth transistor (148) including a drain terminal, a gate terminal, and a source terminal, wherein said drain terminal of said fifth transistor (148) is coupled to said fist voltage potential, said gate terminal receives as input said second carry expander output signal from said second distinct one of said plurality of carry expander circuits (44), and said source terminal of said fifth transistor (148) is coupled to said source terminal of said fourth transistor (146);

a sixth transistor (150) including a drain terminal, a gate terminal, and a source terminal, wherein said drain terminal of said sixth transistor (150) is coupled to said source terminal of said third transistor (144), and said gate terminal of said sixth transistor (150) is coupled to said gate terminal of said third transistor (144); a seventh transistor (152) including a drain terminal, a gate terminal, and a source terminal, wherein said drain terminal of said seventh transistor (152) is coupled to said source terminal of said sixth transistor (150), and said gate terminal of said seventh transistor (152) receives as input said second carry expander output signal from said first distinct one of said plurality of carry expander circuits (44);

an eighth transistor (154) including a drain terminal, a gate terminal, and a source terminal, wherein said drain terminal of said eighth transistor (154) is coupled to said source terminal of said seventh transistor (152), said gate terminal of said eighth transistor (154) receives as input, said second carry expander output signal from said second distinct one of said plurality of carry expander circuits (44), and said source terminal of said eighth transistor (154) is coupled to a second voltage potential;

a ninth transistor (156) including a drain terminal, a gate terminal, and a source terminal, wherein said drain terminal of said ninth transistor (156) is coupled to said source terminal of said fourth transistor (146), said gate terminal of said ninth transistor (156) receives as input said first carry expander output signal from said first distinct one of said plurality of carry expander circuits (44), and said source terminal of said ninth transistor (156) is coupled to said source terminal of said seventh transistor (152);

a tenth transistor (158) including a drain terminal, a gate terminal, and a source terminal, wherein said drain terminal of said tenth transistor (158) is coupled to said source terminal of said fifth transistor (148), said gate terminal of said tenth transistor (158) receives said first carry expander output signal from said second distinct one of said plurality of carry expander circuits (44), and said source terminal of said tenth transistor (158) is coupled to said second voltage potential;

said first to fifth transistors being of a different channel type than said sixth to tenth transistors. wherein said second carry selector output signal is outputted and measured at the drain terminal of said tenth transistor (158).

2. The circuit for rapidly generating a carry out signal as claimed in claim 1, wherein said first, second third, fourth, fifth, sixth, seventh, eighth, ninth and tenth transistors comprise field effect transistors.

3. The circuit for rapidly generating a carry out signal as claimed in claim 2, wherein said first, second, third, fourth and fifth transistors comprise p-channel field effect transistors; and said sixth, seventh, eight, ninth and tenth transistors comprise n-channel field effect transistors.

4. A circuit for rapidly generating a carry out signal resulting from the summation of a first plurality of signals corresponding to a first binary number, a second plurality of signals corresponding to a second binary number, and a first carry in signal, said carry out signal being generated independently of a determination of a sum of said first and second binary numbers, said circuit characterised by:

a plurality of carry generator circuits (42), wherein each of said carry generator circuits (42) receives as inputs a separate and distinct first signal from said first plurality of signals and a separate and distinct second signal from said second plurality of signals, and further wherein each one of said carry generator circuits (42) outputs a first generator output signal representative of a first carry out signal for a carry in signal of a first value and a second generator output signal representative of a second carry out signal for a carry in signal of a second value, said first generator output signal corresponding to the result of a first logic operation performed upon said first signal and said second signal, said second generator output signal corresponding to the result of a second logic operation performed upon said first signal and said second signal;

a plurality of carry expander circuits (44) wherein each one of said plurality of carry expander circuits (44) receives as inputs, from at least three adjacent bit positions, a first generator output signal and a second generator output signal from a first distinct one of said plurality of carry generator circuits (42), a first generator output signal and a second generator output signal from a second distinct one of said plurality of carry generator circuits (42), and a first generator output signal and a second generator output signal from a third distinct one of said plurality of carry generator circuits (42), further wherein, each one of said plurality of carry expander circuits (44) outputs a first carry expander output signal for a carry in signal of a first value and a second carry expander output signal for a carry in signal of a second value;

a first carry selector circuit (46) receiving as inputs a fist generator output signal and a second generator output signal from one of said plurality of carry generator circuits (42), and said first carry in signal, wherein said first carry selector circuit (46) outputs a first carry selector output signal determined by said first carry in signal;

a second carry selector circuit receiving as inputs a first carry expander output signal and a second carry expander output signal from a first distinct one of said plurality of carry expander circuits (44), a first carry expander output signal and a second carry expander output signal from a second distinct one of said plurality of carry expander circuits (44), and said first carry selector circuit (46) output signal, wherein said second carry selector circuit (48) outputs a second carry selector output signal determined by said first carry selector output signal;

wherein said second carry selector output signal is utilised to determine said carry out signal; and

further wherein each one of said carry expander circuits comprises:

a first transistor (100) including a drain terminal, a gate terminal, and a source terminal, wherein said drain terminal of said first transistor (100) is coupled to a first voltage potential, and said gate terminal of said first transistor (100) receives as input said first generator output signal from said third distinct one of said plurality of carry generator circuits (42);

a second transistor (102) including a drain terminal, a gate terminal, and a source terminal, wherein said drain terminal of said second transistor (102) is coupled to said source terminal of said first transistor (100), and said gate terminal of said second transistor (102) receives as input said first generator output signal from said second distinct one of said plurality of carry generator circuits (42);

a third transistor (104) including a drain terminal, a gate terminal, and a source terminal, wherein said drain terminal of said third transistor (104) is coupled to said source terminal of said second transistor (102), and said gate terminal of said third transistor (104) receives as input said first generator output signal from said first distinct one of said plurality of carry generator circuits (42);

a fourth transistor (106) including a drain terminal, a gate terminal, and a source terminal, wherein said drain terminal of said fourth transistor (106) is coupled to said drain terminal of said third transistor (104), and said gate terminal of said fourth transistor (106) receives as input said second generator output signal from said first distinct one of said plurality of carry generator circuits (42);

a fifth transistor (108) including a drain terminal, a gate terminal, and a source terminal, wherein said drain terminal of said fifth transistor (108) is coupled to said drain terminal of said second transistor (102), said gate terminal of said fifth transistor (108) receives as input said second generator output signal from said second distinct one of said plurality of carry generator circuits (42), and said source terminal of said fifth transistor (108) is coupled to said source terminal of said third transistor (104);

a sixth transistor (110) including a drain terminal, a gate terminal, and a source terminal, wherein said drain terminal of said sixth transistor (110) is coupled to said drain terminal of said fifth transistor (108), and said gate terminal of said sixth transistor is coupled to said gate terminal of said fifth transistor (108);

a seventh transistor (112) including a drain terminal, a gate terminal, and a source terminal, wherein said drain terminal of said seventh transistor (112) is coupled to said first voltage potential, said gate terminal of said seventh transistor (112) receives as input said second generator output signal from said third distinct one of said plurality of carry generator circuits (42), and said source terminal of said seventh transistor (112) is coupled to said source terminal of said fifth transistor (108);

an eight transistor (114) including a drain terminal, a gate terminal, and a source terminal, wherein said drain terminal of said eighth transistor (114) is coupled to said first voltage potential, and said gate terminal of said eighth transistor (114) is coupled to said gate terminal of said seventh transistor (112);

a ninth transistor (116) including a drain terminal, a gate terminal, and a source terminal, wherein said drain terminal of said ninth transistor (116) is coupled to said source terminal of said third transistor (104), and said gate terminal of said first transistor (100) is coupled to said gate terminal of said third transistor (104);

a tenth transistor (118) including a drain terminal, a gate terminal, and a source terminal, wherein said drain terminal of said tenth transistor (118) is coupled to said source terminal of said ninth transistor (116), and said gate terminal of said tenth transistor (118) receives as input said second generator output signal from said second distinct one of said plurality of carry generator circuits (42);

an eleventh transistor (120) including a drain terminal, a gate terminal, and a source terminal, wherein said drain terminal of said eleventh transistor (120) is coupled to said source terminal of said tenth transistor (118), said gate terminal or said eleventh transistor (118) receives as input said second generator output signal from said third distinct one of said plurality of carry generator circuits (42), and said source terminal of said eleventh transistor (120) is coupled to a second voltage potential;
a twelfth transistor (122) including a drain terminal, a gate terminal, and a source terminal, wherein said drain terminal of said twelfth transistor (122) is coupled to said source terminal of said fourth transistor (106), said gate terminal of said twelfth transistor (122) is coupled to said gate of said fourth transistor, (106) and said source of said twelfth transistor (122) is coupled to said source of said ninth transistor (116);
a thirteenth transistor (124) including a drain terminal, a gate terminal, and a source terminal, wherein said drain terminal of said thirteenth transistor (124) is coupled to said source terminal of said fifth transistor (108), said gate terminal of said thirteenth transistor (124) receives as input said first generator output signal from said second distinct one of said plurality of carry generator circuits (42), and said source terminal of said thirteenth transistor (124) is coupled to said source terminal of said tenth transistor (118);
a fourteenth transistor (126) including a drain terminal, a gate terminal, and a source terminal, wherein said drain terminal of said fourteenth transistor (126) is coupled to said source terminal of said sixth transistor (110), said gate terminal of said fourteenth transistor (126) is coupled to said gate terminal of said thirteenth transistor (124) and said source terminal of said fourteenth transistor (126) is coupled to said source terminal of said thirteenth transistor (124);
a fifteenth transistor (128) including a drain terminal, a gate terminal, and a source terminal, wherein said drain terminal of said fifteenth transistor (128) is coupled to said source terminal of said seventh transistor (112), said gate terminal of said fifteenth transistor (128) receives as input said first generator output signal from said third distinct one of said plurality of carry generator circuits (42), and said source terminal of said fifteenth transistor (128) is coupled to said second voltage potential;
a sixteenth transistor (130) including a drain terminal, a gate terminal, and a source terminal, wherein said drain terminal of said sixteenth transistor (130) is coupled to said source terminal of said eighth transistor (114), said gate terminal of said transistor (130) is coupled to said gate terminal of said fifteenth transistor (128), and said source terminal of said sixteenth transistor (130) is coupled to said second voltage potential;
said first to eighth transistors being of a different channel type than said ninth to sixteenth transistors.

wherein said first carry expander output signal is outputted and measured at the drain terminal of said fifteenth transistor (128) and said second carry expander output signal is outputted and measured at the drain terminal of said sixteenth transistor (130).

5. The circuit for rapidly generating a carry out signal as claimed in claim 4, wherein said first, second, third, fourth, fifth, sixth, seventh, eighth, ninth, tenth, eleventh, twelfth, thirteenth, fourteenth, fifteenth and sixteenth transistors comprise field effect transistors.

6. The circuit for rapidly generating a carry out signal as claimed in claim 5, wherein said first, second, third, fourth, fifth, sixth, seventh and eighth transistors comprise p-channel field effect transistors; and said ninth, tenth, eleventh, twelfth, thirteenth, fourteenth, fifteenth and sixteenth transistors comprise n-channel field effect transistors.

**Patentansprüche**

1. Eine Schaltung zum Erzeugen eines auslaufenden Übertragssignals, das sich aus der Summierung einer einer ersten Binärzahl entsprechenden ersten Mehrzahl von Signalen, einer einer zweiten Binärzahl entsprechenden zweiten Mehrzahl von Signalen und einem ersten einlaufenden Übertragssignal ergibt, wobei das auslaufende Übertragssignal unabhängig von einer Bestimmung einer Summe der ersten und der zweiten Binärzahl erzeugt wird, wobei die Schaltung gekennzeichnet ist durch:

eine Mehrzahl von Übertragsgeneratorschaltungen (42), wobei jede der Übertragsgeneratorschaltungen (42) als Eingangssignale ein separates und einzelnes erstes Signal der ersten Mehrzahl von Signalen und ein separates und einzelnes zweites Signal der zweiten Mehrzahl von Signalen empfängt, und wobei ferner jede der Übertragsgeneratorschaltungen (42) ein erstes Generatorausgangssignal, das ein erstes auslaufendes Übertragssignal für einen ersten Wert eines einlaufenden Übertragssignals darstellt, und ein zweites Generatorausgangssignal, das ein zweites auslaufendes Übertragssignal für einen zweiten Wert eines einlaufenden Übertragssignals darstellt, ausgibt, wobei das erste Generatorausgangssignal dem Ergebnis einer ersten logischen Operation entspricht, die an dem ersten Signal und dem zweiten Signal ausgeführt wird, wobei das zweite Generatorausgangssignal dem Ergebnis einer zweiten logischen Operation entspricht, die an dem ersten Signal und dem zweiten Signal ausgeführt wird;

eine Mehrzahl von Übertragsausbreiterschaltungen (44), wobei jede der Mehrzahl von Übertragsausbreiterschaltungen (44) von zumindest drei benachbarten Bitpositionen als Eingangssignale ein erstes Generatorausgangssignal und ein zweites Generatorausgangssignal von einer ersten selbständigen Übertragsgeneratorschaltung der Mehrzahl von Übertragsgeneratorschaltungen (42), ein erstes Generatorausgangssignal und ein zweites Generatorausgangssignal von einer zweiten selbständigen Übertragsgeneratorschaltung der Mehrzahl von Übertragsgeneratorschaltungen (42) und ein erstes Generatorausgangssignal und ein zweites Generatorausgangssignal von einer dritten selbständigen Übertragsgeneratorschaltung der Mehrzahl von Übertragsgeneratorschaltungen (42) empfängt, wobei ferner jede der Mehrzahl von Übertragsausbreiterschaltungen (44) ein erstes Übertragsausbreiterausgangssignal für ein einlaufendes Übertragssignal eines ersten Wertes und ein zweites Übertragsausbreiterausgangssignal für ein einlaufendes Übertragssignal eines zweiten Wertes ausgibt;

eine erste Übertragsauswählerschaltung (46), die als Eingangssignale ein erstes Generatorausgangssignal und ein zweites Generatorausgangssignal von einer der Mehrzahl von Übertragsgeneratorschaltungen (42j und das erste einlaufende Übertragssignal empfängt, wobei die erste Übertragsauswählerschaltung (46) ein von dem ersten einlaufenden Übertragssignal bestimmtes erstes Übertragsauswählerausgangssignal ausgibt;

eine zweite Übertragsauswählerschaltung (48), die als Eingangssignale ein erstes Übertragsausbreiterausgangssignal und ein zweites Übertragsausbreiterausgangssignal von einer ersten selbständigen Übertragsausbreiterschaltung der Mehrzahl von Übertragsausbreiterschaltungen (44), ein erstes Übertragsausbreiterausgangssignal und ein zweites Übertragsausbreiterausgangssignal von einer zweiten selbständigen Übertragsausbreiterschaltung der Mehrzahl von Übertragsausbreiterschaltungen (44) und das Ausgangssignal der ersten Übertragsauswählerschaltung (46) empfängt, wobei die zweite Übertragsauswählerschaltung (48) ein von dem ersten Übertragsauswählerausgangssignal bestimmtes zweites Übertragsauswählerausgangssignal ausgibt;

wobei das zweite Übertragsauswählerausgangssignal benutzt wird, um das auslaufende Übertragssignal zu bestimmen;

und wobei ferner die zweite Übertragsauswählerschaltung (48) aufweist:

einen einen Drain-Anschluß, einen Gate-Anschluß und einen Source-Anschluß aufweisenden ersten Transistor (140), wobei der Drain-Anschluß des ersten Transistors (140) mit einem ersten Spannungspotential gekoppelt ist, und wobei der Gate-Anschluß des ersten Transistors (140) als Eingangssignal das erste Übertragsausbreiterausgangssignal von der zweiten selbständigen Übertragsausbreiterschaltung der Mehrzahl von Übertragsausbreiterschaltungen (44) empfängt;

einen einen Drain-Anschluß, einen Gate-Anschluß und einen Source-Anschluß aufweisenden zweiten Transistor (142), wobei der Drain-Anschluß des zweiten Transistors (142) mit dem Source-Anschluß des ersten Transistors (140) gekoppelt ist, und wobei der Gate-Anschluß des zweiten Transistors (142) als Eingangssignal das erste Übertragsausbreiterausgangssignal von der ersten selbständigen Übertragsausbreiterschaltung der Mehrzahl von Übertragsausbreiterschaltungen (44) empfängt;

einen einen Drain-Anschluß, einen Gate-Anschluß und einen Source-Anschluß aufweisenden dritten Transistor (144), wobei der Drain-Anschluß des dritten Transistors (144) mit dem Source-Anschluß des zweiten Transistors (142) gekoppelt ist, und wobei der Gate-Anschluß des dritten Transistors (144) als Eingangssignal das Ausgangssignal der ersten Übertragsausbreiterschaltung (46) empfängt;

einen einen Drain-Anschluß, einen Gate-Anschluß und einen Source-Anschluß aufweisenden vierten Transistor (146), wobei der Drain-Anschluß des vierten Transistors mit dem Source-Anschluß des ersten Transistors (140) gekoppelt ist, wobei der Gate-Anschluß des vierten Transistors (146) als Eingangssignal das zweite Übertragsausbreiterausgangssignal von der ersten selbständigen Übertragsausbreiterschaltung der Mehrzahl von Übertragsausbreiterschaltungen (44) empfängt, und wobei der Source-Anschluß mit dem Source-Anschluß des dritten Transistors (144) gekoppelt ist;

einen einen Drain-Anschluß, einen Gate-Anschluß und einen Source-Anschluß aufweisenden fünften Transistor (148), wobei der Drain-Anschluß des fünften Transistors (148) mit dem ersten Spannungspotential gekoppelt ist, wobei der Gate-Anschluß als Eingangssignal das zweite Übertragsausbreiterausgangssignal von der zweiten selbständigen Übertragsausbreiterschaltung der Mehrzahl von Übertragsausbreiterschaltungen (44) empfängt, und wobei der Source-Anschluß des fünften Transistors (148) mit dem Source-Anschluß des vierten Transistors (146) gekoppelt ist;

einen einen Drain-Anschluß, einen Gate-Anschluß und einen Source-Anschluß aufweisenden sechsten Transistor (150), wobei der Drain-Anschluß des sechsten Transistors (150) mit dem Source-Anschluß des dritten Transistors (144) gekoppelt ist und wobei der Gate-Anschluß des sechsten Transistors (150) mit dem Gate-Anschluß des dritten Transistors (144) gekoppelt ist;

einen einen Drain-Anschluß, einen Gate-Anschluß und einen Source-Anschluß aufweisenden siebenten Transistor (152), wobei der Drain-Anschluß des siebenten Transistors (152) mit dem Source-Anschluß des sechsten Transistors (150) gekoppelt ist, und wobei der Gate-Anschluß des siebenten Transistors (152) als Eingangssignal das zweite Übertragsausbreiterausgangssignal von der ersten selbständigen Übertragsausbreiterschaltung der Mehrzahl von Übertragsausbreiterschaltungen (44) empfängt;

einen einen Drain-Anschluß, einen Gate-Anschluß und einen Source-Anschluß aufweisenden achten Transistor (154), wobei der Drain-Anschluß des achten Transistors (154) mit dem Source-Anschluß des siebenten Transistors (152) gekoppelt ist, wobei der Gate-Anschluß des achten Transistors (154) als Eingangssignal das zweite Übertragsausbreiterausgangssignal von der zweiten selbständigen Übertragsausbreiterschaltung der Mehrzahl von Übertragsausbreiterschaltungen (44) empfängt, und wobei der Source-Anschluß des achten Transistors (154) mit einem zweiten Spannungspotential gekoppelt ist;

einen einen Drain-Anschluß, einen Gate-Anschluß und einen Source-Anschluß aufweisenden neunten Transistor (156), wobei der Drain-Anschluß des neunten Transistors (156) mit dem Source-Anschluß des vierten Transistors (146) gekoppelt ist, wobei der Gate-Anschluß des neunten Transistors (156) als Eingangssignal das erste Übertragsausbreiterausgangssignal von der ersten selbständigen Übertragsausbreiterschaltung der Mehrzahl von Übertragsausbreiterschaltungen (44) empfängt, und wobei der Source-Anschluß des neunten Transistors (156) mit dem Source-Anschluß des siebenten Transistors (152) gekoppelt ist;

einen einen Drain-Anschluß, einen Gate-Anschluß und einen Source-Anschluß aufweisenden zehnten Transistor (158), wobei der Drain-Anschluß des zehnten Transistors (158) mit dem Source-Anschluß des fünften Transistors (148) gekoppelt ist, wobei der Gate-Anschluß des zehnten Transistors (158) das erste Übertragsausbreiterausgangssignal von der zweiten selbständigen Übertragsausbreiterschaltung der Mehrzahl von Übertragsausbreiterschaltungen (44) empfängt, und wobei der Source-Anschluß des zehnten Transistors (158) mit dem zweiten Spannungspotential gekoppelt ist;

wobei der erste bis fünfte Transistor von einem anderen Kanaltyp als der sechste bis zehnte Transistor sind;

wobei das zweite Übertragsauswählerausgangssignal an dem Drain-Anschluß des zehnten Transistors (158) ausgegeben und gemessen wird.

2. Die Schaltung zum schnellen Erzeugen eines auslaufenden Übertragssignals nach Anspruch 1, wobei der erste, zweite, dritte, vierte, fünfte, sechste, siebente, achte, neunte und zehnte Transistor Feldeffektransistoren sind.

3. Die Schaltung zum schnellen Erzeugen eines auslaufenden Übertragssignals nach Anspruch 2, wobei der erste, zweite, dritte, vierte und fünfte Transistor p-Kanal-Feldeffekttransistoren sind; und wobei der sechste, siebente, achte, neunte und zehnte Transistor n-Kanal-Feldeffekttransistoren sind.

4. Eine Schaltung zum schnellen Erzeugen eines auslaufenden Übertragssignals, das sich aus der Summierung einer einer ersten Binärzahl entsprechenden ersten Mehrzahl von Signalen, einer einer zweiten Binärzahl entsprechenden zweiten Mehrzahl von Signalen und eines ersten einlaufenden Übertragssignals ergibt, wobei das auslaufende Übertragssignal unabhängig von einer Bestimmung einer Summe der ersten und der zweiten Binärzahl erzeugt wird, wobei die Schaltung gekennzeichnet ist durch:

eine Mehrzahl von Übertragsgeneratorschaltungen (42), wobei jede der Übertragsgeneratorschaltungen (42) als Eingangssignale ein separates und einzelnes erstes Signal von der ersten Mehrzahl von Signalen und ein separates und einzelnes zweites Signal von der zweiten Mehrzahl von Signalen empfängt, und wobei jede der Übertragsgeneratorschaltungen (42) ein erstes Generatorausgangssignal, das ein erstes auslaufendes Übertragssignal für ein einlaufendes Übertragssignal eines ersten Wertes darstellt, und ein zweites Generatorausgangssignal, das ein zweites auslaufendes Übertragssignal für ein einlaufendes Übertragssignal eines zweiten Wertes darstellt, ausgibt, wobei das erste Generatorausgangssignal dem Ergebnis einer ersten logischen Operation entspricht, die an dem ersten Signal und dem zweiten Signal ausgeführt wird, wobei das zweite Generatorausgangssignal dem Ergebnis einer zweiten logischen Operation entspricht, die an dem ersten Signal und dem zweiten Signal ausgeführt wird;

eine Mehrzahl von Übertragsausbreiterschaltungen (44), wobei jede der Mehrzahl von Übertragsausbreiterschaltungen (44) von zumindest drei benachbarten Bitpositionen als Eingangssignale ein erstes Generatorausgangssignal und ein zweites Generatorausgangssignal von einer ersten selbständigen Übertragsgeneratorschaltung der Mehrzahl von Übertragsgeneratorschaltungen (42), ein erstes Generatorausgangssignal und ein zweites Generatorausgangssignal von einer zweiten selbständigen Übertragsgeneratorschaltung der Mehrzahl von Übertragsgeneratorschaltungen (42) und ein erstes Generatorausgangssignal und ein zweites Generatorausgangssignal von einer dritten selbständigen Übertragsgeneratorschaltung der Mehrzahl von Übertragsgeneratorschaltungen (42) empfängt und wobei ferner jede der Mehrzahl von Übertragsausbreiterschaltungen (44) ein erstes Übertragsausbreiterausgangssignal für ein einlaufendes Übertragssignal eines ersten Wertes und ein zweites Übertragsausbreiterausgangssignal für ein einlaufendes Übertragssignal eines zweiten Wertes ausgibt;

eine erste Übertragsauswählerschaltung (46), die als Eingangssignale ein erstes Generatorausgangssignal und ein zweites Generatorausgangssignal von einer der Mehrzahl von Übertragsgeneratorschaltungen (42) und das erste einlaufende Übertragssignal empfängt, wobei die erste Übertragsauswählerschaltung (46) ein von dem ersten einlaufenden Übertragssignal bestimmtes erstes Übertragsauswählerausgangssignal ausgibt;

eine zweite Übertragsauswählerschaltung, die als Eingangssignale ein erstes Übertragsausbreiterausgangssignal und ein zweites Übertragsausbreiterausgangssignal von einer ersten selbständigen Übertragsausbreiterschaltung der Mehrzahl von Übertragsausbreiterschaltungen (44), ein erstes Übertragsausbreiterausgangssignal und ein zweites Übertragsausbreiterausgangssignal von einer zweiten selbständigen Übertragsausbreiterschaltung der Mehrzahl von Übertragsausbreiterschaltungen (44) und das Ausgangssignal der ersten Übertragsauswählerschaltung (46) empfängt, wobei die zweite Übertragsauswählerschaltung (48) ein von dem ersten Übertragsauswählerausgangssignal bestimmtes zweites Übertragsauswählerausgangssignal ausgibt;

wobei das zweite Übertragsauswählerausgangssignal benutzt wird, um das auslaufende Übertragssignal zu bestimmen; und

wobei ferner jede der Übertragsausbreiterschaltungen aufweist:

einen einen Drain-Anschluß, einen Gate-Anschluß und einen Source-Anschluß aufweisenden ersten Transistor (100), wobei der Drain-Anschluß des ersten Transistors (100) mit einem ersten Spannungspotential gekoppelt ist, und wobei der Gate-Anschluß des ersten Transistors (100) als Eingangssignal das erste Generatorausgangssignal von der dritten selbständigen Übertragsgeneratorschaltung der Mehrzahl von Übertragsgeneratorschaltungen (42) empfängt;

einen einen Drain-Anschluß, einen Gate-Anschluß und einen Source-Anschluß aufweisenden zweiten Transistor (102), wobei der Drain-Anschluß des zweiten Transistors (102) mit dem Source-Anschluß des ersten Transistors (100) gekoppelt ist, und wobei der Gate-Anschluß des zweiten Transistors (102) als Eingangssignal das erste Generatorausgangssignal von der zweiten selbständigen Übertragsgeneratorschaltung der Mehrzahl von Übertragsgeneratorschaltungen (42) empfängt;

einen einen Drain-Anschluß, einen Gate-Anschluß und einen Source-Anschluß aufweisenden dritten Transistor (104), wobei der Drain-Anschluß des dritten Transistors (104) mit dem Source-Anschluß des zweiten Transistors (102) gekoppelt ist, und wobei der Gate-Anschluß des dritten Transistors (104) als Eingangssignal das erste Generatorausgangssignal von der ersten selbständigen Übertragsgeneratorschaltung der Mehrzahl von Übertragsgeneratorschaltungen (42) empfängt;

einen einen Drain-Anschluß, einen Gate-Anschluß und einen Source-Anschluß aufweisenden vierten Transistor (106), wobei der Drain-Anschluß des vierten Transistors (106) mit dem Drain-Anschluß des dritten Transistors (104) gekoppelt ist, und wobei der Gate-Anschluß des vierten Transistors (106) als Eingangssignal das zweite Generatorausgangssignal von der ersten selbständigen Übertragsgeneratorschaltung der Mehrzahl von Übertragsgeneratorschaltungen (42) empfängt;

einen einen Drain-Anschluß, einen Gate-Anschluß und einen Source-Anschluß aufweisenden fünften Transistor (108), wobei der Drain-Anschluß des fünften Transistors (108) mit dem Drain-Anschluß des zweiten Transistors (102) gekoppelt ist, wobei der Gate-Anschluß des fünften Transistors (108) als Eingangssignal das zweite Generatorausgangssignal von der zweiten selbständigen Übertragsgeneratorschaltung der Mehrzahl von Übertragsgeneratorschaltungen (42) empfängt, und wobei der Source-Anschluß des fünften Transistors (108) mit dem Source-Anschluß des dritten Transistors (104) gekoppelt ist;

einen einen Drain-Anschluß, einen Gate-Anschluß und einen Source-Anschluß aufweisenden sechsten Transistor (110), wobei der Drain-Anschluß des sechsten Transistors (110) mit dem Drain-Anschluß des fünften Transistors (108) gekoppelt ist, und wobei der Gate-Anschluß des sechsten Transistors mit dem Gate-Anschluß des fünften Transistors (108) gekoppelt ist;

einen einen Drain-Anschluß, einen Gate-Anschluß und einen Source-Anschluß aufweisenden siebenten Transistor (112), wobei der Drain-Anschluß des siebenten Transistors (112) mit dem ersten Spannungspotential gekoppelt ist, wobei der Gate-Anschluß des siebenten Transistors (112) als Eingangssignal das zweite Generatorausgangssignal von der dritten selbständigen Übertragsgeneratorschaltung der Mehrzahl von Übertragsgeneratorschaltungen (42) empfängt, und wobei der Source-Anschluß des siebenten Transistors (112) mit dem Source-Anschluß des fünften Transistors (108) gekoppelt ist;

einen einen Drain-Anschluß, einen Gate-Anschluß und einen Source-Anschluß aufweisenden achten Transistor (114), wobei der Drain-Anschluß des achten Transistors (114) mit dem ersten Spannungspotential gekoppelt ist, und wobei der Gate-Anschluß des achten Transistors (114) mit dem Gate-Anschluß des siebenten Transistors (112) gekoppelt ist;

einen einen Drain-Anschluß, einen Gate-Anschluß und einen Source-Anschluß aufweisenden neunten Transistor (116), wobei der Drain-Anschluß des neunten Transistors (116) mit dem Source-Anschluß des dritten Transistors (104) gekoppelt ist, und wobei der Gate-Anschluß des ersten Transistors (100) mit dem Gate-Anschluß des dritten Transistors (104) gekoppelt ist;

einen einen Drain-Anschluß, einen Gate-Anschluß und einen Source-Anschluß aufweisenden zehnten Ttansistor (118), wobei der Drain-Anschluß des zehnten Transistors (118) mit dem Source-Anschluß des neunten Transistors (116) gekoppelt ist, und wobei der Gate-Anschluß des zehnten Transistors (118) als Eingangssignal das zweite Generatorausgangssignal von der zweiten selbständigen Übertragsgeneratorschaltung der Mehrzahl von Übertragsgeneratorschaltungen (42) empfängt;

einen einen Drain-Anschluß, einen Gate-Anschluß und einen Source-Anschluß aufweisenden elften Transistor (120), wobei der Drain-Anschluß des elften Transistors (120) mit dem Source-Anschluß des zehnten Transistors (118) gekoppelt ist, wobei der Gate-Anschluß des elften Transistors (118) als Eingangssignal das zweite Generatorausgangssignal von der dritten selbständigen Übertragsgeneratorschaltung der Mehrzahl von Übertragsgeneratorschaltungen (42) empfängt, und wobei der Source-Anschluß des elften Transistors (120) mit einem zweiten Spannungspotential gekoppelt ist;

einen einen Drain-Anschluß, einen Gate-Anschluß und einen Source-Anschluß aufweisenden zwölften Transistor (122), wobei der Drain-Anschluß des zwölften Transistors (122) mit dem Source-Anschluß des vierten Transistors (106) gekoppelt ist, wobei der Gate-Anschluß des zwölften Transistors (122) mit dem Gate-Anschluß des vierten Transistors (106) gekoppelt ist, und wobei der Source-Anschluß des zwölften Transistors (122) mit dem Source-Anschluß des neunten Transistors (116) gekoppelt ist;

einen einen Drain-Anschluß, einen Gate-Anschluß und einen Source-Anschluß aufweisenden dreizehnten Transistor (124), wobei der Drain-Anschluß des dreizehnten Transistors (124) mit dem Source-Anschluß des fünften Transistors (108) gekoppelt ist, wobei der Gate-Anschluß des dreizehnten Transistors (124) als Eingangssignal das erste Generatorausgangssignal von der zweiten selbständigen Übertragsgeneratorschaltung der Mehrzahl von Übertragsgeneratorschaltungen (42) empfängt, und wobei der Source-Anschluß des dreizehnten Transistors (124) mit dem Source-Anschluß des zehnten Transistors (118) gekoppelt ist;

einen einen Drain-Anschluß, einen Gate-Anschluß und einen Source-Anschluß aufweisenden vierzehnten Transistor (126), wobei der Drain-Anschluß des vierzehnten Transistors (126) mit dem Source-Anschluß des sechsten Transistors (110) gekoppelt ist, wobei der Gate-Anschluß des vierzehnten Transistors (126) mit dem Gate-Anschluß des dreizehnten Transistors (124) gekoppelt ist, und wobei der Source-Anschluß des vierzehnten Transistors (126) mit dem Source-Anschluß des dreizehnten Transistors (124) gekoppelt ist;

einen einen Drain-Anschluß, einen Gate-Anschluß und einen Source-Anschluß aufweisenden fünfzehnten Transistor (128), wobei der Drain-Anschluß des fünfzehnten Transistors (128) mit dem Source-Anschluß des siebzehnten Transistors (112) gekoppelt ist, wobei der Gate-Anschluß des fünfzehnten Transistors (128) als Eingangssignal das erste Generatorausgangssignal von der dritten selbständigen Übertragsgeneratorschaltung der Mehrzahl von Übertragsgeneratorschaltungen (42) empfängt, und wobei der Source-Anschluß des fünfzehnten Transistors (128) mit dem zweiten Spannungspotential gekoppelt ist;

einen einen Drain-Anschluß, einen Gate-Anschluß und einen Source-Anschluß aufweisenden sechzehnten Transistor (130), wobei der Drain-Anschluß des sechzehnten Transistors (130) mit dem Source-Anschluß des achten Transistors (114) gekoppelt ist, wobei der Gate-Anschluß des sechzehnten Transistors (130) mit dem Gate-Anschluß des fünfzehnten Transistors (128) gekoppelt ist, und wobei der Source-Anschluß des sechzehnten Transistors (130) mit dem zweiten Spannungspotential gekoppelt ist;

wobei der erste bis achte Transistor von einem anderen Kanaltyp sind als der neunte bis sechzehnte Transistor;

wobei das erste Übertragsausbreiterausgangssignal an dem Drain-Anschluß des fünfzehnten Transistors (128) ausgegeben und gemessen wird, und wobei das zweite Übertragsausbreiterausgangssignal an dem Drain-Anschluß des sechzehnten Transistors (130) ausgegeben und gemessen wird.

5. Die Schaltung zum schnellen Erzeugen eines auslaufenden Übertragssignals nach Anspruch 4, wobei der erste, zweite, dritte, vierte, fünfte, sechste, siebente, achte, neunte, zehnte, elfte, zwölfte, dreizehnte, vierzehnte, fünfzehnte und sechzehnte Transistor Feldeffekttransistoren sind.

6. Die Schaltung zum schnellen Erzeugen eines auslaufenden Übertragssignals nach Anspruch 5, wobei der erste, zweite, dritte, vierte, fünfte, sechste, siebente und achte Transistor p-Kanal-Feldeffekttransistoren sind; und wobei der neunte, zehnte, elfte, zwölfte, dreizehnte, vierzehnte, fünfzehnte und sechzehnte Transistor n-Kanal-Feldeffekttransistoren sind.

## Revendications

1. Circuit pour générer un signal de retenue sortante résultant de la sommation d'une première pluralité de signaux correspondant à un premier nombre binaire, d'une deuxième pluralité de signaux correspondant à un deuxième nombre binaire et d'un premier signal de retenue entrante, ledit signal de retenue sortante étant généré indépendamment d'une détermination d'une somme desdits premier et deuxième nombres binaires, ledit circuit étant caractérisé par :

une pluralité de circuits générateurs de retenues (42), dans lesquels chacun desdits circuits générateurs de retenues (42) reçoit comme entrées un premier signal séparé et distinct provenant de ladite première pluralité de signaux et un deuxième signal séparé et distinct provenant de ladite deuxième pluralité de signaux et dans lesquels en outre, chacun desdits circuits générateurs de retenues (42) délivre en sortie un premier signal de sortie de générateur représentant un premier signal de retenue sortante pour un signal de retenue entrante d'une première valeur, et un deuxième signal de sortie de générateur représentant un deuxième signal de retenue sortante pour un signal de retenue entrante d'une deuxième valeur, ledit premier signal de sortie de générateur correspondant au résultat d'une première opération logique exécutée sur ledit premier signal et ledit deuxième signal, ledit deuxième signal de sortie de générateur correspondant au résultat d'une deuxième opération logique exécutée sur ledit premier signal et ledit deuxième signal ;

une pluralité de circuits expanseurs de retenue (44), dans lesquels chaque circuit de ladite pluralité de circuits expanseurs de retenue (44) reçoit comme entrées, depuis au moins trois positions de bits adjacentes, un premier signal de sortie de générateur et un deuxième signal de sortie de générateur provenant d'un premier circuit distinct de ladite pluralité de circuits générateurs de retenue (42), un premier signal de sortie de générateur et un deuxième signal de sortie de générateur provenant d'un deuxième circuit distinct de ladite pluralité de circuits générateurs de retenue (42), et un premier signal de sortie de générateur et un deuxième signal de sortie de générateur provenant d'un troisième circuit distinct de ladite pluralité de circuits générateurs de retenue (42), dans lesquels en outre, chaque circuit de ladite pluralité de circuits expanseurs de retenue (44) délivre en sortie un premier signal de sortie d'expanseur de retenue pour un signal de retenue entrante d'une première valeur et un deuxième signal de sortie d'expanseur de retenue pour un signal de retenue entrante d'une deuxième valeur ;

un premier circuit sélecteur de retenue (46) recevant comme entrées un premier signal de sortie de générateur et un deuxième signal de sortie de générateur provenant d'un circuit de ladite pluralité de circuits générateurs de retenue (42), et ledit premier signal de retenue entrante, dans lequel ledit premier circuit sélecteur de retenue (46) délivre en sortie un premier signal de sortie de sélecteur de retenue déterminé par ledit premier signal de retenue entrante ;

un deuxième circuit sélecteur de retenue (48) recevant comme entrées un premier signal de sortie d'expanseur de retenue et un deuxième signal de sortie d'expanseur de retenue provenant d'un premier circuit distinct de ladite pluralité de circuits expanseurs de retenue (44), un premier signal de sortie d'expanseur de retenue et un deuxième signal de sortie d'expanseur de retenue provenant d'un deuxième circuit distinct de ladite pluralité de circuits expanseurs de retenue (44), et ledit premier signal de sortie de circuit sélecteur de retenue (46), dans lequel ledit deuxième circuit sélecteur de retenue (48) délivre en sortie un deuxième signal de sortie de sélecteur de retenue déterminé par ledit premier signal de sortie de sélecteur de retenue ;

dans lequel ledit deuxième signal de sortie de sélecteur de retenue est utilisé pour déterminer lesdits signaux de retenue sortante

et dans lequel en outre, ledit deuxième signal de sortie de sélecteur de retenue (48) comprend :

un premier transistor (140) comportant une borne de drain, une borne de grille et une borne de source, dans lequel ladite borne de drain dudit premier transistor (140) est couplée à un premier potentiel de tension, et ladite borne de grille dudit premier transistor (140) reçoit comme entrée ledit premier signal de sortie d'expanseur de retenue provenant dudit deuxième circuit distinct de ladite pluralité de circuits expanseurs de retenue (44) ;

un deuxième transistor (142) comportant une borne de drain, une borne de grille et une borne de source, dans lequel ladite borne de drain dudit deuxième transistor (142) est couplée à ladite borne de source dudit premier transistor (140), et ladite borne de grille dudit deuxième transistor (142) reçoit comme entrée ledit premier signal de sortie d'expanseur de retenue provenant dudit premier circuit distinct de ladite pluralité de circuits expanseurs de retenue (44) ;

un troisième transistor (144) comportant une borne de drain, une borne de grille et une borne de source, dans lequel ladite borne de drain dudit troisième transistor (144) est couplée à ladite borne de source dudit deuxième transistor (142), et ladite borne de grille dudit troisième transistor (144) reçoit comme entrée ledit premier signal de sortie du circuit sélecteur de retenue (46) ;

un quatrième transistor (146) comportant une borne de drain, une borne de grille et une borne de source, dans lequel ladite borne de drain dudit quatrième transistor est couplée à ladite borne de source dudit premier transistor (140), ladite borne de grille dudit quatrième transistor (146) reçoit comme entrée ledit deuxième signal de sortie d'expanseur de retenue provenant dudit premier circuit distinct de ladite pluralité de circuits expanseurs de retenue (44), et ladite borne de source est couplée à ladite borne de source dudit troisième transistor (144) ;

un cinquième transistor (148) comportant une borne de drain, une borne de grille et une borne de source, dans lequel ladite borne de drain dudit cinquième transistor (148) est couplée audit premier potentiel de tension, ladite borne de grille reçoit comme entrée ledit deuxième signal de sortie d'expanseur de retenue provenant dudit deuxième circuit distinct de ladite pluralité de circuits expanseurs de retenue (44), et ladite borne de source dudit cinquième transistor (148) est couplée à ladite borne de source dudit quatrième transistor (146) ;

un sixième transistor (150) comportant une borne de drain, une borne de grille et une borne de source, dans lequel ladite borne de drain dudit sixième transistor (150) est couplée à ladite borne de source dudit troisième transistor (144), et ladite borne de grille dudit sixième transistor (150) est couplée à ladite borne de grille dudit troisième transistor (144) ;

un septième transistor (152) comportant une borne de drain, une borne de grille et une borne de source, dans lequel ladite borne de drain dudit septième transistor (152) est couplée à ladite borne de source dudit sixième transistor (150), et ladite borne de grille dudit septième transistor (152) reçoit comme entrée ledit deuxième signal de sortie d'expanseur de retenue provenant dudit premier circuit distinct de ladite pluralité de circuits expanseurs de retenue (44) ;

un huitième transistor (154) comportant une borne de drain, une borne de grille et une borne de source, dans lequel ladite borne de drain dudit huitième transistor (154) est couplée à ladite borne de source dudit septième transistor (152), ladite borne de grille dudit huitième transistor (154) reçoit comme entrée ledit deuxième signal de sortie d'expanseur de retenue provenant dudit deuxième circuit distinct de ladite pluralité de circuits expanseurs de retenue (44), et ladite borne de source dudit huitième transistor (154) est couplée à un deuxième potentiel de tension ;

un neuvième transistor (156) comportant une borne de drain, une borne de grille et une borne de source, dans lequel ladite borne de drain dudit neuvième transistor (156) est couplée à ladite borne de source dudit quatrième transistor (146), ladite borne de grille dudit neuvième transistor (156) reçoit comme entrée ledit premier signal de sortie d'expanseur de retenue provenant dudit premier circuit distinct de ladite pluralité de circuits expanseurs de retenue (44), et ladite borne de source dudit neuvième transistor (156) est couplée à ladite borne de source dudit septième transistor (152) ;

un dixième transistor (158) comportant une borne de drain, une borne de grille et une borne de source, dans lequel ladite borne de drain dudit dixième transistor (158) est couplée à ladite borne de source dudit cinquième transistor (148), ladite borne de grille dudit dixième transistor (158) reçoit ledit premier signal de sortie d'expanseur de retenue provenant dudit deuxième circuit distinct de ladite pluralité de circuits expanseurs de retenue (44), et ladite borne de source dudit dixième transistor (158) est couplée audit deuxième potentiel de tension ;

lesdits premier jusqu'au cinquième transistors étant d'un type de canal différent desdits sixième jusqu'au dixième transistors

dans lequel ledit deuxième signal de sortie de sélecteur de retenue est délivré en sortie et mesuré au niveau de la borne de drain dudit dixième transistor (158).

2. Circuit pour générer rapidement un signal de retenue sortante selon la revendication 1, dans lequel lesdits premier, deuxième, troisième, quatrième, cinquième, sixième, septième, huitième, neuvième et dixième transistors sont constitués de transistors à effet de champ.

3. Circuit pour générer rapidement un signal de retenue sortante selon la revendication 2, dans lequel lesdits premier, deuxième, troisième, quatrième et cinquième transistors sont constitués de transistors à effet de champ à canal p ; et lesdits sixième, septième, huitième, neuvième et dixième transistors sont constitués de transistors à effet de champ à canal n.

4. Circuit pour générer rapidement un signal de retenue sortante résultant de la sommation d'une première pluralité de signaux correspondant à un premier nombre binaire, d'une deuxième pluralité de signaux correspondant à un deuxième nombre binaire et d'un premier signal de retenue entrante, ledit signal de retenue sortante étant généré indépendamment d'une détermination d'une somme desdits premier et deuxième nombres binaires, ledit circuit étant caractérisé par :

une pluralité de circuits générateurs de retenues (42), dans lesquels chacun desdits circuits générateurs de retenues (42) reçoit comme entrées un premier signal séparé et distinct provenant de ladite première pluralité de signaux et un deuxième signal séparé et distinct provenant de ladite deuxième pluralité de signaux et dans lesquels en outre, chacun desdits circuits générateurs de retenues (42) délivre en sortie un premier signal de sortie de générateur représentant un premier signal de retenue sortante pour un signal de retenue entrante d'une première valeur, et un deuxième signal de sortie de générateur représentant un deuxième signal de retenue sortante pour un signal de retenue entrante d'une deuxième valeur, ledit premier signal de sortie de générateur correspondant au résultat d'une première opération logique exécutée sur ledit premier signal et ledit deuxième signal, ledit deuxième signal de sortie de générateur correspondant au résultat d'une deuxième opération logique exécutée sur ledit premier signal et ledit deuxième signal ;

une pluralité de circuits expanseurs de retenue (44), dans lesquels chaque circuit de ladite pluralité de circuits expanseurs de retenue (44) reçoit comme entrées, depuis au moins trois positions de bits adjacentes, un premier signal de sortie de générateur et un deuxième signal de sortie de générateur provenant d'un premier circuit distinct de ladite pluralité de circuits générateurs de retenue (42), un premier signal de sortie de générateur et un deuxième signal de sortie de générateur provenant d'un deuxième circuit distinct de ladite pluralité de circuits générateurs de retenue (42), et un premier signal de sortie de générateur et un deuxième signal de sortie de générateur provenant d'un troisième circuit distinct de ladite pluralité de circuits générateurs de retenue (42), dans lesquels en outre, chaque circuit de ladite pluralité de circuits expanseurs de retenue (44) délivre en sortie un premier signal de sortie d'expanseur de retenue pour un signal de retenue entrante d'une première valeur et un deuxième signal de sortie d'expanseur de retenue pour un signal de retenue entrante d'une deuxième valeur ;

un premier circuit sélecteur de retenue (46) recevant comme entrées un premier signal de sortie de générateur et un deuxième signal de sortie de générateur provenant d'un circuit de ladite pluralité de circuits générateurs de retenue (42), et ledit premier signal de retenue entrante, dans lequel ledit premier circuit sélecteur de retenue (46) délivre en sortie un premier signal de sortie de sélecteur de retenue déterminé par ledit premier signal de retenue entrante ;

un deuxième circuit sélecteur de retenue recevant comme entrées un premier signal de sortie d'expanseur de retenue et un deuxième signal de sortie d'expanseur de retenue provenant d'un premier circuit distinct de ladite pluralité de circuits expanseurs de retenue (44), un premier signal de sortie d'expanseur de retenue et un deuxième signal de sortie d'expanseur de retenue provenant d'un deuxième circuit distinct de ladite pluralité de circuits expanseurs de retenue (44), et ledit premier signal de sortie de circuit sélecteur de retenue (46) , dans lequel ledit deuxième circuit sélecteur de retenue (48) délivre en sortie un deuxième signal de sortie de sélecteur de retenue déterminé par ledit premier signal de sortie de sélecteur de retenue ;

dans lequel ledit deuxième signal de sortie de sélecteur de retenue est utilisé pour déterminer lesdits signaux de retenue sortante ; et

dans lequel en outre, chacun desdits circuits expanseurs de retenue comprend :

un premier transistor (100) comportant une borne de drain, une borne de grille et une borne de source, dans lequel ladite borne de drain dudit premier transistor (100) est couplée à un premier potentiel de tension, et ladite borne de grille dudit premier transistor (100) reçoit comme entrée ledit premier signal de sortie de générateur provenant dudit troisième circuit distinct de ladite pluralité de circuits générateurs de retenue (42) ;

un deuxième transistor (102) comportant une borne de drain, une borne de grille et une borne de source, dans lequel ladite borne de drain dudit deuxième transistor (102) est couplée à ladite borne de source dudit premier transistor (100), et ladite borne de grille dudit deuxième transistor (102) reçoit comme entrée ledit premier signal de sortie de générateur provenant dudit deuxième circuit distinct de ladite pluralité de circuits générateurs de retenue (42) ;

un troisième transistor (104) comportant une borne de drain, une borne de grille et une borne de source, dans lequel ladite borne de drain dudit troisième transistor (104) est couplée à ladite borne de source dudit deuxième transistor (102), et ladite borne de grille dudit troisième transistor (104) reçoit comme entrée ledit premier signal de sortie de générateur provenant dudit premier circuit distinct de ladite pluralité de circuits générateurs de retenue (42) ;

un quatrième transistor (106) comportant une borne de drain, une borne de grille et une borne de source, dans lequel ladite borne de drain dudit quatrième transistor (106) est couplée à ladite borne de drain dudit troisième transistor (104), et ladite borne de grille dudit quatrième transistor (106) reçoit comme entrée ledit deuxième signal de sortie de générateur provenant dudit premier circuit distinct de ladite pluralité de circuits générateurs de retenue (42) ;

un cinquième transistor (108) comportant une borne de drain, une borne de grille et une borne de source, dans lequel ladite borne de drain dudit cinquième transistor (108) est couplée à ladite borne de drain dudit deuxième transistor (102), ladite borne de grille dudit cinquième transistor (108) reçoit comme entrée ledit deuxième signal de sortie de générateur provenant dudit deuxième circuit distinct de ladite pluralité de circuits générateurs de retenue (42), et ladite borne de source dudit cinquième transistor (108) est couplée à ladite borne de source dudit troisième transistor (104) ;

un sixième transistor (110) comportant une borne de drain, une borne de grille et une borne de source, dans lequel ladite borne de drain dudit sixième transistor (110) est couplée à ladite borne de drain dudit cinquième transistor (108), et ladite borne de grille dudit sixième transistor est couplée à ladite borne de grille dudit cinquième transistor (108) ;

un septième transistor (112) comportant une borne de drain, une borne de grille et une borne de source, dans lequel ladite borne de drain dudit septième transistor (112) est couplée audit premier potentiel de tension, ladite borne de grille dudit septième transistor (112) reçoit comme entrée ledit deuxième signal de sortie de générateur provenant dudit troisième circuit distinct de ladite pluralité de circuits générateurs de retenue (42), et ladite borne de source dudit septième transistor (112) est couplée à ladite borne de source dudit cinquième transistor (108) ;

un huitième transistor (114) comportant une borne de drain, une borne de grille et une borne de source, dans lequel ladite borne de drain dudit huitième transistor (114) est couplée audit premier potentiel de tension, et ladite borne de grille dudit huitième transistor (114) est couplée à ladite borne de grille dudit septième transistor (112) ;

un neuvième transistor (116) comportant une borne de drain, une borne de grille et une borne de source, dans lequel ladite borne de drain dudit neuvième transistor (116) est couplée à ladite borne de source dudit troisième transistor (104), et ladite borne de grille dudit premier transistor (100) est couplée à ladite borne de grille dudit troisième transistor (104) ;

un dixième transistor (118) comportant une borne de drain, une borne de grille et une borne de source, dans lequel ladite borne de drain dudit dixième transistor (118) est couplée à ladite borne de source dudit neuvième transistor (116), et ladite borne de grille dudit dixième transistor (118) reçoit comme entrée ledit deuxième signal de sortie de générateur provenant dudit deuxième circuit distinct de ladite pluralité de circuits générateurs de retenue (42) ;

un onzième transistor (120) comportant une borne de drain, une borne de grille et une borne de source, dans lequel ladite borne de drain dudit onzième transistor (120) est couplée à ladite borne de source dudit dixième transistor (118), ladite borne de grille dudit onzième transistor (118) reçoit comme entrée ledit deuxième signal de sortie de générateur provenant dudit troisième circuit distinct de ladite pluralité de circuits générateurs de retenue (42), et ladite borne de source dudit onzième transistor (120) est couplée à un deuxième potentiel de tension ;

un douzième transistor (122) comportant une borne de drain, une borne de grille et une borne de source, dans lequel ladite borne de drain dudit douzième transistor (122) est couplée à ladite borne de source dudit quatrième transistor (106), ladite borne de grille dudit douzième transistor (122) est couplée à ladite borne de grille dudit quatrième transistor (106), et ladite borne de source dudit douzième transistor (122) est couplée à ladite source dudit neuvième transistor (116) ;

un treizième transistor (124) comportant une borne de drain, une borne de grille et une borne de source, dans lequel ladite borne de drain dudit treizième transistor (124) est couplée à ladite borne de source dudit cinquième transistor (108), ladite borne de grille dudit treizième transistor (124) reçoit comme entrée ledit premier signal de sortie de générateur provenant dudit deuxième circuit distinct de ladite pluralité de circuits générateurs de retenue (42), et ladite borne de source dudit treizième transistor (124) est couplée à ladite borne de source dudit dixième transistor (118) ;

un quatorzième transistor (126) comportant une borne de drain, une borne de grille et une borne de source, dans lequel ladite borne de drain dudit quatorzième transistor (126) est couplée à ladite borne de source dudit sixième transistor (110), ladite borne de grille dudit quatorzième transistor (126) est couplée à ladite borne de grille dudit treizième transistor (124), et ladite borne de source dudit quatorzième transistor (126) est couplée à ladite borne de source dudit treizième transistor (124) ;

un quinzième transistor (128) comportant une borne de drain, une borne de grille et une borne de source, dans lequel ladite borne de drain dudit quinzième transistor (128) est couplée à ladite borne de source dudit septième transistor (112), ladite borne de grille dudit quinzième transistor (128) reçoit comme entrée ledit premier signal de sortie de générateur provenant dudit troisième circuit distinct de ladite pluralité de circuits générateurs de retenue (42), et ladite borne de source dudit quinzième transistor (128) est couplée audit deuxième potentiel de tension ;

un seizième transistor (130) comportant une borne de drain, une borne de grille et une borne de source, dans lequel ladite borne de drain dudit seizième transistor (130) est couplée à ladite borne de source dudit huitième transistor (114), ladite borne de grille dudit transistor (130) est couplée à ladite borne de grille dudit quinzième transistor (128) , et ladite borne de source dudit seizième transistor (130) est couplée audit deuxième potentiel de tension ;

lesdits premier jusqu'au huitième transistors étant d'un type de canal différent desdits neuvième jusqu'au seizième transistors dans lequel ledit premier signal de sortie d'expanseur de retenue est délivré en sortie et mesuré au niveau de la borne de drain dudit quinzième transistor (128) et ledit deuxième signal de sortie d'expanseur de retenue est délivré en sortie et mesuré au niveau de la borne de drain dudit seizième transistor (130).

5. Circuit pour générer rapidement un signal de retenue sortante selon la revendication 4, dans lequel lesdits premier, deuxième, troisième, quatrième, cinquième, sixième, septième, huitième, neuvième, dixième, onzième, douzième, treizième, quatorzième, quinzième et seizième transistors sont constitués de transistors à effet de champ.

6. Circuit pour générer rapidement un signal de retenue sortante selon la revendication 5, dans lequel lesdits premier, deuxième, troisième, quatrième, cinquième, sixième, septième et huitième transistors sont constitués de transistors à effet de champ à canal p ; et lesdits neuvième, dixième, onzième, douzième, treizième, quatorzième, quinzième et seizième transistors sont constitués de transistors à effet de champ à canal n.

Fig. 1
(PRIOR ART)

EP 0 508 627 B1

**Fig. 2**
(PRIOR ART)

Fig. 3

Fig. 4

Cout_0_ =1  if  !Cin2_1 + !Cin2_0 [!Cin1_1 + !Cin1_0 * !Cprev_0]
       =0  if   Cin2_0 + Cin 2_1 [Cin1_0 + Cin1_1 * Cprev_0]
Cout_1_ =1  if   !Cin2_1 + !Cin2_0 [!Cin1_1 + !Cin1_0 * !Cprev-1]
       =0  if   Cin2_0 + Cin2_1[Cin1_0 + Cin1_1 * Cprev_1]

**Figure 5**

3-bit Carry Expander:

Cout_0_ = !((((Cin2_0 * !Cin1_0) + (Cin2_1 * Cin1_0)) * !Cprev_0) + (((Cin2_0 * !Cin1_1) + (Cin2_1 * Cin1_1)) * Cprev_0))

Cout_1_ = !((((Cin2_0 * !Cin1_0) + (Cin2_1 * Cin1_0)) * !Cprev_1) + (((Cin2_0 * !Cin1_1) + (Cin2_1 * Cin1_1)) * Cprev_1))

EP 0 508 627 B1

*Figure 6*

3-bit Carry Expander/Selector:

Cout_ = !(((((Cin2_0 * !Cin1_0) + (Cin2_1 * Cin1_0)) * !Cprev) + ((((Cin2_0 * !Cin1_1) + (Cin2_1 * Cin1_1)) * Cprev))

Fig. 7

b1

b0

Cout_1_

a0

64

a1

Cout_

**Fig. 8**

Fig. 9

66

or3_
or2_
or1_
or0_
and0_
and1_
and2_
and3_

Fig. 10

Fig. 11

70

or3_
or2_
or1_
c0_
and1_
and2_
and3_